(19) **Europäisches Patentamt / European Patent Office / Office européen des brevets**

(11) **EP 4 753 269 A1**

(12) **EUROPEAN PATENT APPLICATION**
published in accordance with Art. 153(4) EPC

(43) Date of publication:
**03.06.2026  Bulletin 2026/23**

(21) Application number: **24874833.7**

(22) Date of filing: **14.07.2024**

(51) International Patent Classification (IPC):
**H04N 21/2662** (2011.01)  **H04N 21/2343** (2011.01)
**H04N 7/01** (2006.01)  **G06T 3/4053** (2024.01)
**G06N 3/0985** (2023.01)  **G06N 3/045** (2023.01)

(52) Cooperative Patent Classification (CPC):
**G06N 3/045; G06N 3/0985; G06T 3/4053;
H04N 7/01; H04N 21/2343; H04N 21/2662**

(86) International application number:
**PCT/KR2024/010071**

(87) International publication number:
**WO 2025/075274 (10.04.2025 Gazette 2025/15)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **05.10.2023  KR 20230132460**

(71) Applicant: **SAMSUNG ELECTRONICS CO., LTD.
Yeongtong-gu
Suwon-si, Gyeonggi-do 16677 (KR)**

(72) Inventors:
• **KIM, Donghyun**
  **Suwon-si, Gyeonggi-do 16677 (KR)**
• **LEE, Hyunseung**
  **Suwon-si, Gyeonggi-do 16677 (KR)**
• **MOON, Youngsu**
  **Suwon-si, Gyeonggi-do 16677 (KR)**
• **JEONG, Younghoon**
  **Suwon-si, Gyeonggi-do 16677 (KR)**
• **CHOI, Kyuha**
  **Suwon-si, Gyeonggi-do 16677 (KR)**

(74) Representative: **Gulde & Partner
Patent- und Rechtsanwaltskanzlei mbB
Berliner Freiheit 2
10785 Berlin (DE)**

(54) **SERVER AND OPERATING METHOD THEREOF, AND IMAGE PROCESSING DEVICE AND OPERATING METHOD THEREOF**

(57)    A server may include: a communication interface; memory storing one or more instructions; and at least one processor operatively connected to the memory and the communication interface, and configured to execute the one or more instructions to: obtain a first image by compressing an original image; obtain quality information of the first image by analyzing image quality of the first image; obtain, based on the quality information, meta model information of a meta model used for performing image quality processing on the first image; and control the communication interface to transmit the meta model information and the first image to an image processing device configured to display a second image based on the meta model information and the first image.

FIG. 3

START

OBTAIN FIRST IMAGE BY COMPRESSING ORIGINAL IMAGE — S310

OBTAIN QUALITY INFORMATION BY ANALYZING QUALITY OF FIRST IMAGE — S320

OBTAIN META MODEL INFORMATION BASED ON QUALITY INFORMATION — S330

TRANSMIT META MODEL INFORMATION AND FIRST IMAGE TO IMAGE PROCESSING DEVICE — S340

END

## Description

TECHNICAL FIELD

The disclosure relates to a server configured to transmit a low-quality image to an image processing device and an operating method thereof, and the image processing device configured to output a high-quality image by performing image quality processing on the low-quality image received from the server and an operating method thereof.

BACKGROUND ART

With the advancement of deep learning technology, various types of learning-based upscaling methods have been developed. The learning-based upscaling method exhibits excellent performance when quality characteristics of a learning image and quality characteristics of an input image actually processed are similar, but when characteristics of an image to be processed are different from image quality assumed during learning, image quality performance deteriorates significantly.

To resolve such a problem, on-device learning research has been undertaken to process and adapt an artificial intelligence (AI) model to input data. In the field of on-device learning research, a paper (ZSSR, CVPR 2018, Zero-Shot Super-Resolution using Deep Internal Learning, hereinafter referred to as "Paper 1") on image processing and image quality improvement was recently published.

Paper 1 is named Zero-Shot Super Resolution (ZSSR), which is a technology that constructs a database (DB) by using magnetic input images according to deterioration characteristics of input images and enlarges the images by using a model trained by using the DB. Because ZSSR creates a new DB from scratch according to an input image each time and uses the DB to train a model, learning complexity is high and it is difficult to apply ZSSR to videos with severe changes in image quality.

To improve these drawbacks, another paper (MetaSR, ECCV 2021, Fast Adaptation to Super-Resolution Networks via Meta-Learning, hereinafter referred to as "Paper 2") was published. Paper 2 is about a technology of learning an initial meta model from an external DB and finding a model that matches characteristics of an input image through transfer learning to reduce learning operation complexity of ZSSR. However, because the technology in Paper 2 uses only one meta model, there are performance limitations in including all the characteristics of various input images in one meta model, and in an environment in which low-capacity networks such as edge devices are used, this limitation of the meta model becomes a factor limiting performance of on-device learning.

Because Paper 1 and Paper 2 are about training by constructing a learning DB by referring to an input image, image quality improvement performance may be obtained when a still image includes a building with repetitive outline characteristics or a periodic gesture. However, in reality, in addition to images assumed in an existing method, there are many images that have deteriorated during shooting, transmission, and compression processes, and these images have lost highfrequency components that are hints for image quality restoration, and it is difficult to find repeated components within the images. Therefore, there are limitations in constructing a learning DB by only using videos thereof, which results in poor performance.

In addition, because the existing method has been developed to improve image quality of still images, it is difficult to apply the previous method to moving images. Models trained independently for each image may have differences in restoration performance due to differences in a degree of convergence of learning and characteristics of a learning DB. Due to the above, when an independent model is applied to each frame, clarity of the image also changes each time, which may cause flicker distortion, which is a phenomenon of temporal image quality unevenness.

DISCLOSURE OF INVENTION

SOLUTION TO PROBLEM

According to an embodiment of the disclosure, a server includes a communication unit, a memory storing one or more instructions, and at least one processor configured to execute the one or more instructions.

The at least one processor may be further configured to execute the one or more instructions obtain a first image by compressing an original image.

The at least one processor may be further configured to execute the one or more instructions to analyze image quality of the first image and obtain quality information of the first image.

The at least one processor may be further configured to execute the one or more instructions to obtain meta model information of a meta model used for performing image quality processing on the first image based on the quality information.

The at least one processor may be further configured to execute the one or more instructions to control the communication unit to transmit the meta model information and the first image to an image processing device.

According to an embodiment of the disclosure, an image processing device includes a communication unit, a memory storing one or more instructions, and at least one processor configured to execute the one or more instructions.

The at least one processor may be further configured to execute the one or more instructions to control the communication unit to receive a first image and meta model information from a server.

The at least one processor may be further configured to execute the one or more instructions to generate a meta model based on the meta model information.

The at least one processor may be further configured to execute the one or more instructions to train the meta model by using a learning data set corresponding to the first image.

The at least one processor may be further configured to execute the one or more instructions to obtain a second image based on the trained meta model, the second image being obtained by performing image quality processing on the first image.

The at least one processor may be further configured to execute the one or more instructions to control the display to display the second image.

According to an embodiment of the disclosure, an operating method of a server includes obtaining a first image by compressing an original image.

The operating method of the server may include obtaining quality information of the first image by analyzing image quality of the first image.

The operating method of the server may include obtaining, based on the quality information, meta model information of a meta model used for performing image quality processing on the first image.

The operating method of the server may include transmitting the meta model information and the first image to an image processing device.

BRIEF DESCRIPTION OF DRAWINGS

The above and other aspects, features, and advantages of certain embodiments of the present disclosure will be more apparent from the following description taken in conjunction with the accompanying drawings, in which:

FIG. 1 is a diagram illustrating an image quality processing system for an image, according to one or more embodiments of the disclosure;

FIG. 2 is a diagram showing quality information of various images in a graph, according to one or more embodiments of the disclosure;

FIG. 3 is a flowchart of an operating method of a server, according to one or more embodiments of the disclosure;

FIG. 4 is a diagram illustrating a configuration of a server according to one or more embodiments of the disclosure;

FIG. 5 is a diagram illustrating a structure of a first neural network according to one or more embodiments of the disclosure;

FIG. 6 is a graph showing quality values for a plurality of frame images included in video content, according to one or more embodiments of the disclosure;

FIG. 7 is a diagram for describing that a meta model is obtained based on at least one reference model, according to one or more embodiments of the disclosure;

FIG. 8 is a flowchart of an operating method of an image processing device, according to one or more embodiments of the disclosure;

FIG. 9 is a diagram illustrating a configuration of an image processing device according to one or more embodiments of the disclosure;

FIG. 10 is a diagram for describing an operation of a model training unit according to one or more embodiments of the disclosure;

FIG. 11 is a diagram for describing an operation of obtaining, by a learning database (DB) generation unit, images of a category similar to a category of a first image, according to one or more embodiments of the disclosure;

FIG. 12 is a diagram for describing an operation of generating a learning data set by a learning DB generation unit, according to one or more embodiments of the disclosure;

FIG. 13 is a diagram for describing a method of reflecting deterioration occurring during a compression process in a learning image, according to one or more embodiments of the disclosure;

FIG. 14 is a block diagram illustrating a configuration of a server according to one or more embodiments of the disclosure;

FIG. 15 is a block diagram illustrating a configuration of an image processing device according to one or more embodiments of the disclosure; and

FIG. 16 is a block diagram illustrating a configuration of an image processing device according to one or more embodiments of the disclosure.

MODE FOR INVENTION

Throughout the disclosure, the expression "at least one of a, b or c" indicates only a, only b, only c, both a and b, both a and c, both b and c, all of a, b, and c, or variations thereof. The terms used herein are briefly explained, and the disclosure is described in detail.

All terms including descriptive or technical terms which are used herein should be construed as having meanings that are obvious to one of ordinary skill in the art. However, the terms may have different meanings according to the intention of one of ordinary skill in the art, precedent cases, or the appearance of new technologies. Also, some terms may be arbitrarily selected by the applicant, and in this case, the meaning of the selected terms will be described in detail in the detailed description of the disclosure. Thus, the terms used herein have to be defined based on the meaning of the terms together with the description throughout the specification.

Throughout the specification, when a part "includes" or "comprises" an element, unless there is a particular description contrary thereto, the part may further include other elements, not excluding the other elements. In addition, the terms such as "unit", "module", and the like used herein indicate a unit for processing at least one function or motion, and the unit and the module may be implemented by hardware or software or by a combination of hardware and software.

Herein below, with reference to the accompanying drawings, embodiments of the disclosure are described in detail so as to be easily implemented by a person skilled in the art to which the disclosure pertains. However, the disclosure may be implemented in various different forms and is not limited to the embodiments described herein. Also, in the drawings, parts irrelevant to the description are omitted in order to clearly describe the disclosure, and like reference numerals designate like elements throughout the specification.

In one or more embodiments of the present specification, the term "user" refers to a person who controls a system, function, or operation, and may include an engineer, an administrator, or an installer.

In addition, in one or more embodiments of the present specification, "image" or "picture" may refer to a still image, a moving image including a plurality of consecutive still images (or frames), or a video.

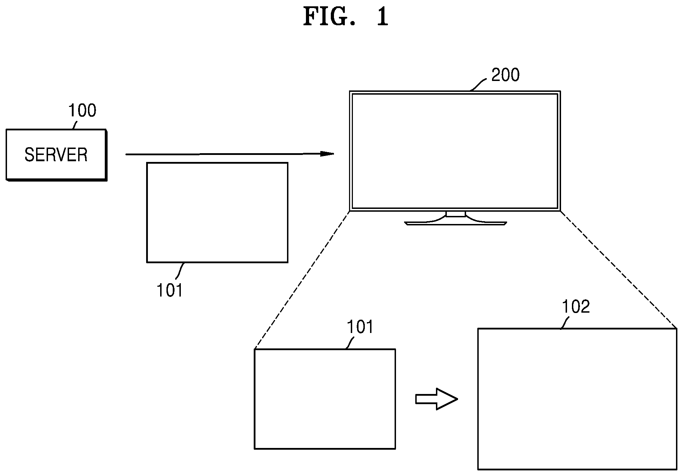

FIG. 1 is a diagram illustrating an image quality processing system for an image, according to one or more embodiments of the disclosure.

Referring to FIG. 1, a server 100 according to one or more embodiments of the disclosure may be a content provider configured to provide content to an image processing device 200. The content provider may refer to a terrestrial broadcasting station, cable broadcasting station, or over-the-top (OTT) service provider, or Internet Protocol television (IPTV) service provider that provide various contents to consumers. However, the disclosure is not limited thereto.

The server 100 according to one or more embodiments of the disclosure may transmit various contents such as video content, image content, audio content, and text content to the image processing device 200. For example, the server 100 may stream image data to the image processing device 200 so that the image processing device 200 may play the image data in real time. In addition, the server 100 may stream various types of data, such as audio data and text data, to the image processing device 200 in addition to the image data.

The server 100 according to one or more embodiments of the disclosure may provide video content such as various movies or dramas through television programs or video on demand (VOD) services to the image processing device 200. The video content may include a plurality of frame images.

The video content may be captured by a capture device, compressed and transmitted by the server 100 according to one or more embodiments of the disclosure, and restored and output by the image processing device 200. In this case, the video content may have various qualities depending on the deterioration that occurs during a process of obtaining, transmitting, and storing the video content.

The server 100 according to one or more embodiments of the disclosure may compress image content (video content). For example, the server 100 may obtain and store a plurality of compressed image data having different resolutions or different bit rates for the same image content.

The server 100 according to one or more embodiments of the disclosure may transmit a first image 101, which is compressed, to the image processing device 200.

The image processing device 200 according to one or more embodiments of the disclosure may be an electronic device configured to process and output images. The image processing device 200 according to one or more embodiments of the disclosure may be implemented in various forms including a display. For example, the image processing device 200 may be implemented in various electronic devices such as a TV, a mobile phone, a tablet personal computer (PC), a digital camera, a camcorder, a laptop computer, a desktop, an electronic-book terminal, a terminal for digital broadcasting, a personal digital assistant (PDA), a portable multimedia player (PMP), a navigation, an MP3 player, and a wearable device.

The image processing device 200 according to one or more embodiments of the disclosure may obtain a second image 102 (output image) by performing image quality processing on the first image 101 (input image) received from the server 100. For example, the image processing device 200 may obtain a high-resolution (or high-quality) output image by upscaling a low-resolution (or low-quality) input image by using an image quality processing model.

The image quality model according to one or more embodiments of the disclosure may include a model obtained by training an obtained meta model by using a learning data set corresponding to the first image 101 based on quality of the first image 101.

The server 100 according to one or more embodiments of the disclosure may obtain quality information of the first image 101 that is compressed, and obtain meta model information based on the quality information of the first image 101. The server 100 may transmit the meta model information and the compressed first image to the image processing device 200.

The image processing device 200 according to one or more embodiments of the disclosure may generate the meta model based on the meta model information received from the server and train the meta model by using the learning data set corresponding to the first image 101. The image processing device 200 may process the image quality of the first image 101 by using the trained meta model, thereby obtaining the high-quality (or high-resolution) second image 102.

Herein below, operations of the server 100 and the image processing device 200 according to one or more embodiments of the disclosure are described in detail.

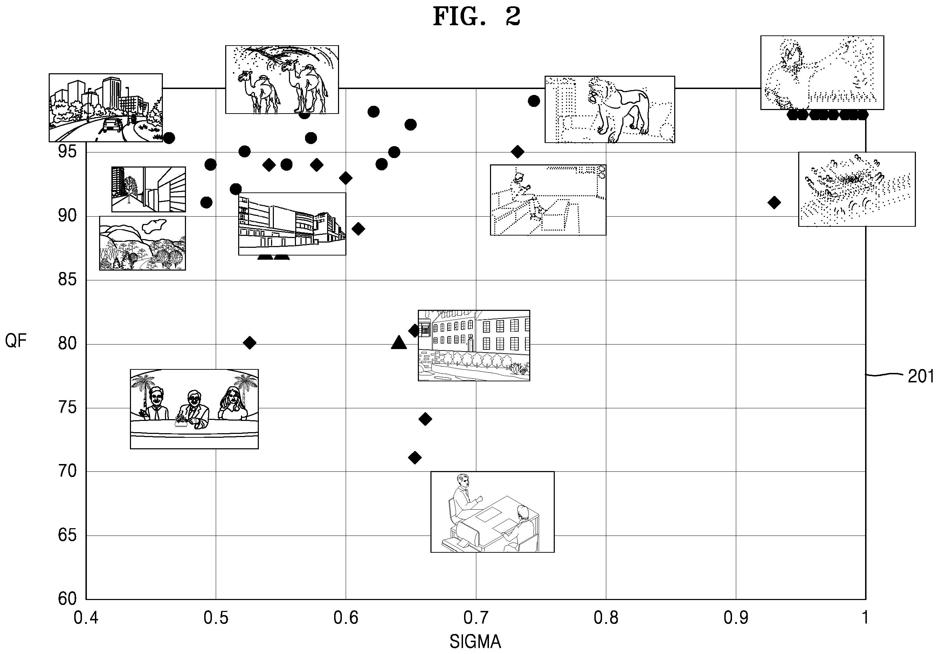

FIG. 2 is a diagram showing quality information of various images in a graph, according to one or more embodiments of the disclosure.

FIG. 2 is a graph showing results of analyzing image quality of various images on a quality plane, and shows results of qualities of moving images captured through an image quality analyzer in a two-dimensional graph.

Referring to FIG. 2, a horizontal axis of a graph 201 represents a Kernel Sigma value, and a vertical axis represents compression quality (quality factor (QF)) of an image. The Kernel Sigma value is a value that represents blur quality of an image, and the greater the Kernel Sigma increases, the greater the degree of blur, and the smaller the Kernel Sigma value, the smaller the degree of blur. The QF represents a degree of deterioration due to compression. The smaller the QF value, the more severe the deterioration due to compression, and the greater the QF value, the less deterioration due to compression.

In the graph 201, symbols of the same shape represent quality values of images with the same resolution. As shown in the graph 201, even when images have the same resolution and have the same symbol, the quality values of the images may be distributed in various ways. Even when images have the same resolution, the images may have various qualities depending on the deterioration that occurs during the process of obtaining, transmitting, and storing the images.

Therefore, adaptive image quality processing (image processing) based on the quality information of the image is necessary. The server 100 according to one or more embodiments of the disclosure may obtain a meta model adaptive to the first image based on the quality information of the first image. An image processing device 200 according to one or more embodiments of the disclosure may generate an image quality processing model adaptive to a first image, based on the meta model obtained from the server 100 and the quality information of the first image, and perform image quality processing on the first image. Thus, the image quality processing performance of the first image may be improved.

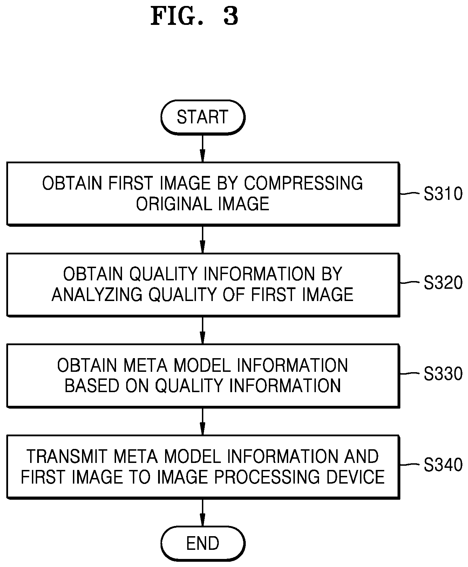

FIG. 3 is a flowchart of an operating method of a server, according to one or more embodiments of the disclosure.

Referring to FIG. 3, the server 100 according to one or more embodiments of the disclosure may obtain a first image by compressing an original image, in operation S310.

The server 100 according to one or more embodiments of the disclosure may obtain and store a plurality of compressed image data having different resolutions or different bit rates for the same original image.

For example, the compressed image data may include image data with resolutions of 8 k, 4 k, full high definition (HD; FHD), and HD for the same content. Alternatively, the compressed image data may include a plurality of compressed image data having bit rates of 40 Mbps, 30 Mbps, 20 Mbps, and 10 Mbps for the same original image. However, the disclosure is not limited thereto.

The server 100 according to one or more embodiments of the disclosure may determine image data (first image) to be transmitted to the image processing device from among the plurality of compressed image data according to a status of a network connected to the image processing device 200 according to one or more embodiments of the disclosure. For example, the status of the network may be determined according to a degree of traffic generation in a transmission/reception path between the server 100 and the image processing device 200.

Alternatively, the server 100 may determine image data (first image) to be transmitted to the image processing device from among the plurality of compressed image data at the request of the image processing device 200.

The server 100 according to one or more embodiments of the disclosure may obtain quality information by analyzing image quality of the first image, in operation S320.

For example, the server 100 may determine the image quality or quality of the first image. The image quality of the image may represent a degree of image deterioration. The server 100 may determine evaluate or determine at least one of compression deterioration of the first image, a sharpness degree of the first image, a degree of blur, a degree of noise, or a resolution of the image.

The server 100 according to one or more embodiments of the disclosure may analyze or evaluate the image quality of the first image by using a first neural network, which is trained to analyze or evaluate the image quality of the first image. For example, the first neural network may be a neural network trained to evaluate image quality or video quality by using image quality assessment (IQA) technology, video quality assessment (VQA) technology, or the like.

For example, the server 100 may obtain a kernel signal value representing blur quality of an image and a quality factor (QF) representing compression quality of the image as quality information by using the first neural network. However, the disclosure is not limited thereto.

When the first image is one of a plurality of frame images included in video content, the server 100 according to one or more embodiments of the disclosure may obtain quality information of the first image based on quality information for each of the plurality of frame images.

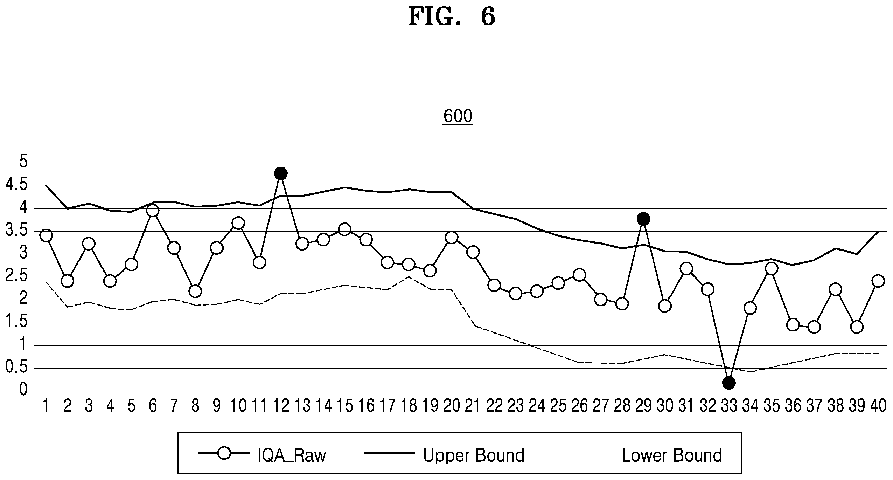

For example, the server 100 may determine whether there is an abnormality in a quality value of the first image based on quality values of each of the plurality of frame images, and when there is an abnormality, the server 100 may not use the corresponding value. The server 100 may determine whether the quality value of the first image is abnormal based on an average value and standard deviation of the quality values of the plurality of frame images. This is described in detail with reference to FIG. 6.

In operation S330, the server 100 according to one or more embodiments of the disclosure may obtain meta model information based on the quality information obtained in operation 320.

For example, the server 100 may obtain a meta model by using at least one reference model. The reference model is an image quality processing model pre-trained by using a learning image and may include first reference models stored in the image processing device 200 and second reference models stored in the server 100.

The server 100 according to one or more embodiments of the disclosure may generate the second reference models for image quality processing of the first image. For example, the server 100 may generate the second reference models by training an image processing model by using learning images having quality information similar to the quality information of the first image.

Alternatively, the pre-trained first reference model may be stored in the image processing device 200 by using learning images having various quality information.

The server 100 according to one or more embodiments of the disclosure may search for a reference model corresponding to a learning image having quality information similar to the quality information of the first image by comparing the quality information of the learning images corresponding to each of the plurality of reference models with the quality information of the first image.

The server 100 according to one or more embodiments of the disclosure may search for a plurality of reference models and perform a weighted sum of the plurality of reference models by applying a weight to each of the plurality of reference models, thereby obtaining a meta model. In this case, the weight applied to each of the plurality of reference models may be determined based on a difference between quality information of a learning image corresponding to a reference model and the quality information of the first image.

The meta model information according to one or more embodiments of the disclosure may include information about at least one reference model, information about a weight applied to at least one reference model, an obtained meta model, or the like.

For example, when the meta model is obtained by using the first reference model, the information about the at least one reference model may include identification information of the first reference model. Alternatively, when the meta model is obtained by using the second reference model, the information about the at least one reference model may include the second reference model.

The server 100 according to one or more embodiments of the disclosure may transmit the meta model information and the first image to the image processing device 200.

For example, when the meta model is obtained by using second reference models, the server 100 may transmit the obtained meta model or the second reference models to the image processing device 200. Alternatively, when the meta model is obtained based on the first reference models, the server 100 may transmit identification information (e.g., a model number or the like) about the first reference models to the image processing device 200.

In addition, the server 100 may transmit, to the image processing device 200, the information about the weight applied to each of the plurality of reference models for obtaining the meta model.

In addition, the server 100 may transmit, to the image processing device 200, the quality information of the first image obtained from the server.

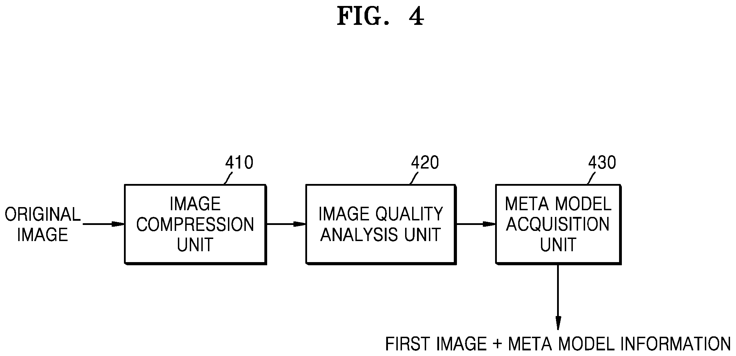

FIG. 4 is a diagram illustrating a configuration of a server according to one or more embodiments of the disclosure.

Referring to FIG. 4, the server 100 according to one or more embodiments of the disclosure may include an image compression unit 410, an image quality analysis unit 420, and a meta model acquisition unit 430.

The image compression unit 410 according to one or more embodiments of the disclosure may obtain and store a plurality of compressed image data having different resolutions or different bit rates for the same original image. For example, the compressed image data may include image data with resolutions of 8 k, 4 k, FHD, and HD for the same content. Alternatively, the compressed image data may include a plurality of compressed image data having bit rates of 40 Mbps, 30 Mbps, 20 Mbps, and 10 Mbps for the same original image. However, the disclosure is not limited thereto.

Image data (first image) to be transmitted to the image processing device from among the plurality of compressed image data may be determined according to a status of a network connected between the server 100 and the image processing device 200 according to one or more embodiments of the disclosure. Alternatively, the image data (first image) to be transmitted to the image processing device 200 may be determined based on the request of the image processing device 200.

The image quality analysis unit 420 according to one or more embodiments of the disclosure may analyze or evaluate image quality or quality of the first image to be transmitted to the image quality analysis unit 420. The image quality of the image may represent a degree of image deterioration. The image quality analysis unit 420 may determine evaluate or determine at least one of compression deterioration of the first image, a sharpness degree of the first image, a degree of blur, a degree of noise, or a resolution of the image.

The image quality analysis unit 420 according to one or more embodiments of the disclosure may analyze or evaluate the image quality of the first image by using a first neural network, which is trained to analyze or evaluate the image quality of the first image. For example, the first neural network may be a neural network trained to evaluate image quality or video quality by IQA technology, VOA technology, or the like.

For example, the first neural network may be a neural network trained to receive the first image and output a kernel signal value representing blur quality of an image and a quality factor (QF) representing compression quality of the image.

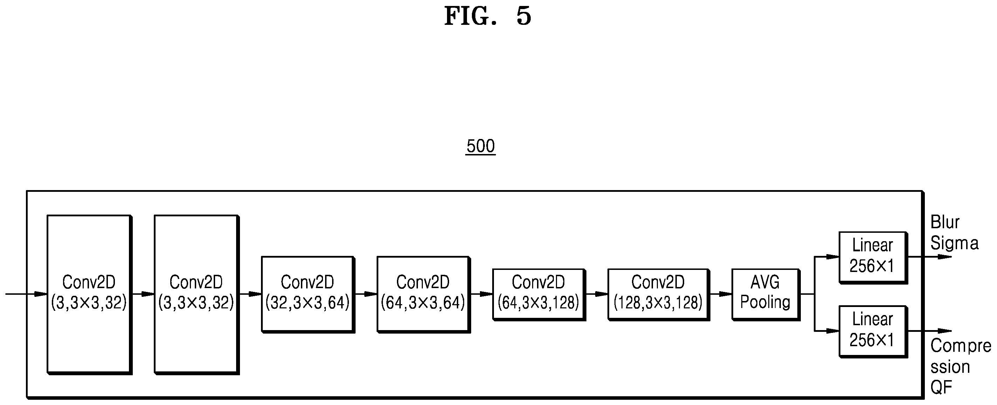

The first neural network according to one or more embodiments of the disclosure is described in detail with reference to FIG. 5.

FIG. 5 is a diagram illustrating a structure of a first neural network according to one or more embodiments of the disclosure.

Referring to FIG. 5, a first neural network 500 may be a neural network based on a convolution neural network (CNN), a deep convolution neural network (DCNN), or a capsule network (CapsNet).

For example, the first neural network 500 may receive various data and may be trained to discover or learn by itself a method of analyzing the input data, a method of classifying the input data, and/or a method of extracting a feature necessary for generating result data from the input data. The first neural network 500 may be created as an artificial intelligence model with desired characteristics by applying a learning algorithm to a plurality of learning data. This learning may be performed in the server 100 itself or through a separate server/system.

Examples of the learning algorithm may include supervised learning, unsupervised learning, semi-supervised learning, or reinforcement learning, and the learning algorithm in the embodiment is not limited to the examples described above unless specified.

For example, the first neural network 500 may be trained as a data inference model through supervised learning using learning data as an input value. Alternatively, the first neural network 500 may be trained as a data inference model through unsupervised learning, in which a standard for determining image quality of an image is discovered by learning on its own a type of data necessary for determining the image quality of the image without any supervision. Alternatively, the first neural network 500 may be trained as a data inference model through reinforcement learning that uses feedback on whether a result of inferring the image quality of the image according to learning is correct.

In one or more embodiments of the disclosure, the first neural network 500 may include an input layer, a hidden layer, and an output layer. In one or more embodiments of the disclosure, the hidden layer may include a plurality of hidden layers. The first neural network 500 may be a deep neural network (DNN) including two or more hidden layers. The DNN is a neural network that performs operations through a plurality of layers, and a depth of the network may increase depending on the number of internal layers performing the operations. The DNN operations may include CNN operations or the like.

The first neural network 500 according to one or more embodiments of the disclosure may be trained by using a learning DB, which includes each learning image and quality values corresponding to the each learning image as a learning data set. For example, the learning data set may include degraded images generated by compressing, blurring, or adding noise to high-resolution images in various ways, and quality values of the deteriorated images. In other words, the first neural network 500 may be trained to output the quality value of the degraded image when the degraded image is input to the first neural network 500.

For example, a first image including R, G, and B channels (RGB 3ch) may be input to the first neural network 500 shown in FIG. 5. Alternatively, a first image including Y, U, and V channels (YUV 3ch) may be input.

The first neural network 500 according to one or more embodiments of the disclosure may receive the first image including the R, G, and B channels (RGB 3ch) or the Y, U, and V channels (YUV 3ch), and perform a convolution operation by applying one or more kernels or filters to the first image, thereby extracting a feature map. For example, the first neural network 500 may output 32 channels by applying 32 3 X 3 filters to the first image. The first neural network 500 may scan a target of the convolution operation pixel by pixel from left to right and from top to bottom, and multiply the target by weight values included in the kernel and add the result, thereby generating a result value. Data subject to the convolution operation may be scanned by moving pixel by pixel, but may be scanned by moving by two or more pixels. During the scanning process, the number of pixels that input data moves is referred to as a stride, and a size of the output feature map may be determined according to a size of the stride.

The first neural network 500 according to one or more embodiments of the disclosure may have a single input multi output structure in which two types of quality values are output for one input image.

In addition, in order to reduce network complexity, the first neural network 500 according to one or more embodiments of the disclosure may have a structure in which middle layers that extract features are commonly used and an output is separated at the last stage to output quality factors of the image.

The first neural network 500 according to one or more embodiments of the disclosure may obtain a 128-channel vector through pooling and convert the 128-channel vector into a 256-channel vector through a linear network. Thereafter, the first neural network 500 may obtain a final result by reducing the 256-channel vector to one dimension. In one or more embodiments of the disclosure, the first neural network 500 may output a quality value of an input image as two defined quality values.

The first neural network 500 according to one or more embodiments of the disclosure may output blur sigma (or kernel sigma) and compression QF as result values. Kernel sigma and QF may implicitly express deterioration of compressed images. However, the disclosure is not limited thereto, and the first neural network according to one or more embodiments of the disclosure may obtain various types of quality values as a result in addition to blur sigma (or kernel sigma) and compression QF values.

The image quality analysis unit 420 according to one or more embodiments of the disclosure may obtain a statistically stable quality value for the first image based on quality values for part or all of content including the first image. For example, when the content is video content, the content may include a plurality of frame images, and the first image may be any of the plurality of first images.

The image quality analysis unit 420 according to one or more embodiments of the disclosure may obtain a quality value for each of the plurality of frame images. The image quality analysis unit 420 may determine a quality value of the first image based on the quality values of the plurality of frame images. This is described with reference to FIG. 6.

FIG. 6 is a graph showing quality values for a plurality of frame images included in video content, according to one or more embodiments of the disclosure.

The x-axis of the graph of FIG. 6 represents numbers of the plurality of frame images, and the y-axis represents quality values (e.g., blur quality values) of the frame images.

The image quality analysis unit 420 according to one or more embodiments of the disclosure may determine a variable range of quality values by setting an upper bound and a lower bound of the quality values based on an average value and standard deviation of the blur quality values of the plurality of frame images. When the quality value of the first image is greater than the upper bound or less than the lower bound, the image quality analysis unit 420 may not use the corresponding quality value and may replace the quality value with another value. For example, the image quality analysis unit 420 may use the average value of the quality values of the plurality of frame images as the quality value of the first image. Alternatively, the image quality analysis unit 420 may use the calculated quality value as the quality value of the first image based on a quality value of a previous frame image of the first image and a quality value of a next frame image.

However, the disclosure is not limited thereto, and the image quality analysis unit 420 may perform image quality analysis on the entire content by using various methods, and when it is determined that the quality value of the first image is abnormal, correct the quality value of the first image.

The image quality analysis unit 420 of the server 100 according to one or more embodiments of the disclosure may perform image quality analysis on the entire content including a plurality of frame images, and when a quality value of one of the plurality of frame images is abnormal, correct the corresponding quality value so that accuracy of image quality analysis may be improved.

In addition, the server 100 may transmit statistics, such as an average quality value or variable quality value range of the content, to the image processing device 200.

Referring again to FIG. 3, the meta model acquisition unit 430 may generate meta model information for image quality processing of the first image based on the quality information of the first image received from the image quality analysis unit 420.

For example, the meta model acquisition unit 430 may obtain a meta model by using at least one reference model. The reference model is an image quality processing model pre-trained by using a learning image and may include first reference models stored in the image processing device 200 and second reference models stored in the server 100. The pre-trained first reference model may be stored in the image processing device 200 by using learning images having various quality information.

The meta model acquisition unit 430 according to one or more embodiments of the disclosure may generate the second reference models for image quality processing of the first image. For example, the meta model acquisition unit 430 may generate the second reference models by training an image processing model by using learning images having quality information similar to the quality information of the first image.

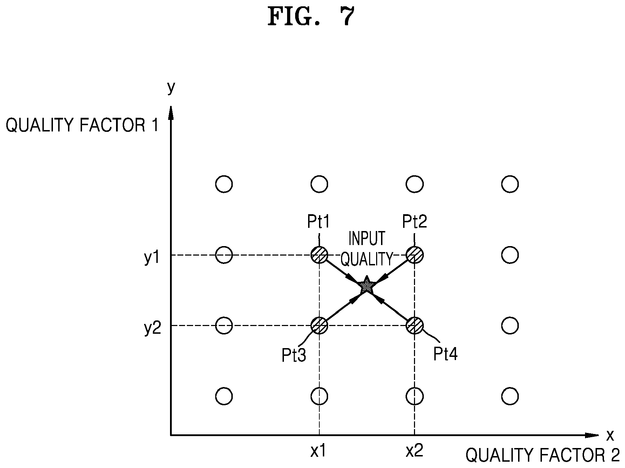

A method by which the meta model acquisition unit 430 according to one or more embodiments of the disclosure obtains a meta model by using quality information of the first image and at least one reference model is described below with reference to FIG. 7.

FIG. 7 is a diagram for describing that a meta model is obtained based on at least one reference model, according to one or more embodiments of the disclosure.

The meta model for image quality processing of the first image, according to one or more embodiments of the disclosure may be generated based on a reference model, which is a pre-trained image quality processing model.

The graph of FIG. 7 represents a quality plane graph. The quality plane graph is a graph representing the quality of an image with two quality factors, with the horizontal axis representing quality factor 1 and the vertical axis representing quality factor 2.

The quality plane graph according to one or more embodiments of the disclosure may include N points in a grid form. For example, learning images respectively corresponding to the N points may include learning images deteriorated to have the corresponding quality. In other words, in the graph of FIG. 7, the learning images may refer to learning images having quality values corresponding to coordinate values of the respective points. For example, a first point Pt1 may represent learning images having coordinate values $(x1, y1)$ of the first point as a quality value thereof, and a second point Pt2 may represent learning images having coordinate values $(x2, y1)$ of the second point as a quality value thereof.

A device for generating a reference model (reference model generation device) may generate learning images for each of the N points by degrading the learning images before degradation. The reference model generation device may generate a reference model by training the image quality processing model by using a learning data set including learning images before degradation and learning images after degradation. For example, the reference model generation device may train the image quality processing model by using learning images as a learning data set, thereby generating reference model 1 corresponding to the first point Pt1, wherein the learning images are obtained by degrading the learning images before degradation and the learning images obtained by degrading the images before degradation to have the quality value of the first point Pt1.

Reference model 1 may be an image quality processing model trained such that the learning images after degradation corresponding to the quality value of the first point Pt1 is restored to the learning images before degradation. In addition, reference model 1 may be a model suitable for processing image quality of images having the quality value of the first point Pt1.

In addition, the reference model generation device may train the image quality processing model by using learning images as a learning data set, thereby generating reference model 2 corresponding to the second point Pt2, wherein the learning images are obtained by degrading the learning images before degradation and the learning images after degradation to have the quality value of the second point Pt2.

Reference model 2 may be an image quality processing model trained such that the learning images after degradation corresponding to the quality value of the second point Pt2 is restored to the learning images before degradation. In addition, reference model 2 may be a model suitable for processing image quality of the images having the quality value of the second point Pt2.

The reference model generation device according to one or more embodiments of the disclosure may generate a reference model corresponding to each of the N points in the grid shape shown in FIG. 7. The reference model generation device determines positions of quality values of target learning images as the respective positions of the N points in the grid form through uniform sampling, so that the N reference models are respectively trained to learning images having quality values at uniform intervals.

However, the disclosure is not limited thereto, and the device for generating a reference model may determine a quality value corresponding to the reference model based on a quality value distribution of the learning images. For example, the reference model generation device may obtain the quality values of the learning images by analyzing the learning images and determine a representative quality sampling position through statistical distribution of the quality values of the learning images. For example, the reference model generation device may determine the representative sampling position by using a K-means clustering algorithm. This method is an algorithm that finds a point with a minimum error when a data distribution is represented by K representative points.

The reference model generation device may group the quality value distribution of the learning images into a predetermined number, for example, K clusters, and determine a quality value at which a variance of a distance difference in each of the clusters is minimized. The reference model generation device may train a reference model by using the learning images after image quality degradation having the determined quality value and the corresponding learning images before image quality degradation as a learning data set. In this case, because a reference model may be trained by using learning images having high statistical quality values, the number of reference models may be reduced. In addition, the reference model thus obtained may have a higher usability when generating a meta model in the future. In addition, when the meta model is generated by using the reference model obtained in this way, computational complexity and memory usage may be reduced.

The trained reference models may be stored in a server or an image processing device according to one or more embodiments of the disclosure.

Meanwhile, the server 100 according to one or more embodiments of the disclosure may generate reference models by using the same method as described above. For example, the server 100 according to one or more embodiments of the disclosure may generate the second reference models for performing image quality processing on the first image. The server 100 may generate the second reference models by training an image processing model by using learning images having quality information similar to the quality information of the first image. The second reference models may be image quality processing models trained such that the learning images after degradation having quality information similar to quality information of the first image is restored to the learning images before degradation. However, the disclosure is not limited thereto.

The meta model acquisition unit 430 according to one or more embodiments of the disclosure may search for a reference model corresponding to a learning image having quality information similar to the quality information of the first image by comparing the quality information of the learning images corresponding to each of the plurality of reference models with the quality information of the first image.

The meta model acquisition unit 430 may search for a reference model trained from learning images having quality values close to the quality value of the first image. For example, as shown in FIG. 7, the meta model acquisition unit 430 may calculate a difference between the quality value of the first image and the quality values of the learning images used to train the reference models, and search for a nearby reference model in order of distance.

In addition, from among a plurality of reference models, the meta model acquisition unit 430 may search for reference models trained with learning images having quality values in which a difference from the quality value of the first image is within a reference value. Alternatively, from among the plurality of reference models, the meta model acquisition unit 430 may search for reference models trained with learning images having a preset number of quality values in an order of small difference (close distance) from the quality value of the first image.

As shown in FIG. 7, when the first image has a quality value of a point where a star shape is displayed, the meta model acquisition unit 430 may search for a reference model trained with learning images having quality values close to a point close to the star shape on the graph of FIG. 7, that is, the quality value of the first image.

The meta model acquisition unit 430 may search for or select reference model 1 corresponding to the first point Pt1 close to the star shape, reference model 2 corresponding to the second point Pt2, reference model 3 corresponding to a third point Pt3, and reference model 4 corresponding to a fourth point Pt4.

The meta model acquisition unit 430 according to one or more embodiments of the disclosure may obtain a meta model by interpolating a plurality of found reference models. Interpolating a plurality of reference models may mean interpolating parameters of known reference models and using the interpolated parameters as parameters of the meta model. The meta model acquisition unit 430 may obtain a weight (interpolation coefficient) by using a difference between the quality value of the first image and a quality value corresponding to a reference model (distance between a position of the star shape and a position of the quality value corresponding to the reference model).

For example, the meta model acquisition unit 430 may obtain a meta model by interpolating the reference models as shown in Equation 1 below.

$$\text{Meta model} = W1 * \text{reference model } 1 + W2 * \text{reference model } 2 + ... + WN * \text{reference model } N \qquad \text{[Equation 1]}$$

Here, reference models 1 to N may represent parameters of the reference model. W1 to WN are weights applied to each reference model, and the weight may be determined as a value inversely proportional to a difference between quality values corresponding to selected reference models and the quality value of the first image (distance between the position of the star shape and the position of the quality value corresponding to the reference model). In addition, a sum of the weights may be 1. However, the disclosure is not limited thereto, and the meta model acquisition unit 430 may use various methods to obtain a meta model by interpolating a plurality of reference models. For example, the meta model acquisition unit 430 may obtain a meta model from a reference model by using various interpolation methods such as linear interpolation, spline interpolation, cubic interpolation, bilinear interpolation in which linear interpolation is extended to two dimensions, or bicubic interpolation in which cubic interpolation is extended to two dimensions.

The meta model acquisition unit 430 according to one or more embodiments of the disclosure may transmit information about the obtained meta model (meta model information) and the first image to the image processing device 200. In addition, the meta model acquisition unit 430 may transmit the quality information of the first image to the image processing device 200.

The meta model information according to one or more embodiments of the disclosure may include information about at least one reference model, information about a weight applied to at least one reference model, an obtained meta model, or the like.

For example, when the meta model is obtained by using the first reference model, the meta model information may include identification information of the first reference model and information about a weight applied to the first reference model. Alternatively, when the meta model is obtained by using the second reference model, the meta model information may include information about the second reference model and information about a weight applied to the second reference model.

The meta model information the quality information of the first image according to one or more embodiments of the disclosure may be transmitted to the image processing device 200 together with identification information of the first image or time information (e.g., time stamp) of the first image.

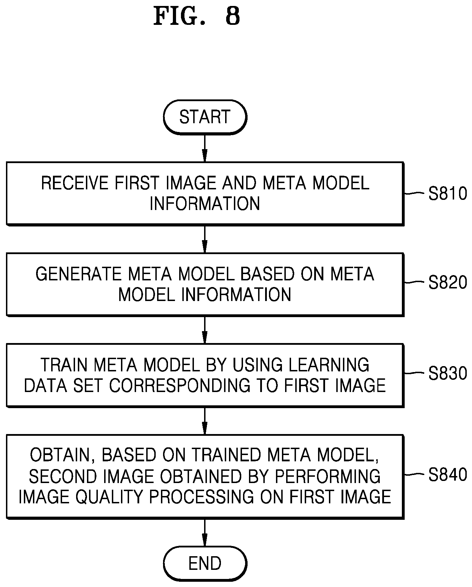

FIG. 8 is a flowchart of an operating method of an image processing device, according to one or more embodiments of the disclosure.

Referring to FIG. 8, the image processing device 200 according to one or more embodiments of the disclosure may receive a first image and meta model information, in operation S810.

The image processing device 200 according to one or more embodiments of the disclosure may generate a meta model based on the meta model information, in operation S820.

When the meta model information includes identification information of a first reference model, the image processing device 200 according to one or more embodiments of the disclosure may load the first reference model pre-stored in the image processing device 200 corresponding to the identification information of the first reference model. In addition, when the meta model information includes information about a second reference model or the meta model, the image processing device 200 may store the second reference model or the meta model in the image processing device 200.

The image processing device 200 may generate a meta model by applying a weight included in the meta model information to the first reference model or the second reference model. For example, the image processing device 200 may apply a weight to each of the plurality of reference models and add the weighted reference models (weighted sum) to generate the meta model. However, the disclosure is not limited thereto.

The image processing device 200 according to one or more embodiments of the disclosure may train the meta model generated in operation S820 by using a learning data set corresponding to the first image, in operation S830.

For example, the image processing device 200 may obtain a learning data set corresponding to the first image by using the first image. The image processing device 200 may identify a category of the first image and identify an image belonging to the identified category from learning data stored in a DB. The learning data may include high-quality images. The learning data may be stored in an external DB or in an internal memory of the image processing device 200.

The image processing device 200 according to one or more embodiments of the disclosure may generate an image with degraded image quality by performing at least one of compressing and degrading, blurring, adding noise, or down sampling on the selected learning images.

The image processing device 200 according to one or more embodiments of the disclosure may train the meta model by using the selected learning images and the images with degraded image quality obtained by performing image quality processing on the learning images as a learning data set. For example, the image processing device 200 may input the image with degraded quality included in the learning data set to the meta model and update parameters of the meta model so that a difference between the image output from the meta model and a high-quality learning image included in the learning data set is minimized.

The image processing device 200 according to one or more embodiments of the disclosure may obtain, based on the trained meta model, a second image by performing image quality processing on the first image, in operation S840.

The trained meta model (updated model) according to one or more embodiments of the disclosure may include a neural network trained to process image quality of an input image. For example, the trained meta model may be a model trained to process low-resolution or low-quality images into high-resolution or high-quality images. The second image according to one or more embodiments of the disclosure may be an image with higher resolution or higher quality than the first image.

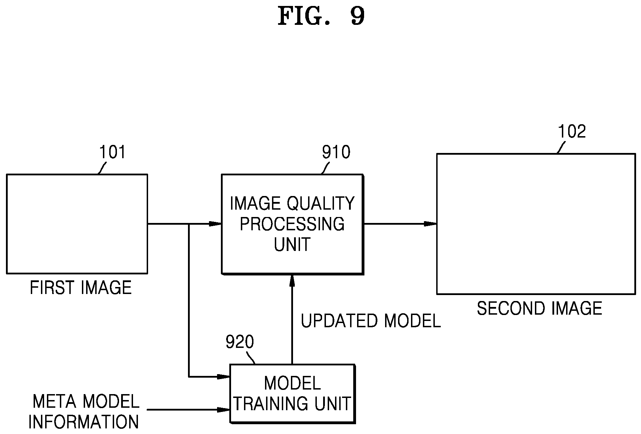

FIG. 9 is a diagram illustrating a configuration of an image processing device according to one or more embodiments of the disclosure.

Referring to FIG. 9, the image processing device 200 according to one or more embodiments of the disclosure may include an image quality processing unit 910 and a model training unit 920.

The image quality processing unit 910 may obtain the second image 102 by performing image quality processing on the first image 101 received from the server 100. For example, the image quality processing unit 910 may perform image quality processing on the first image by using a second neural network trained to process image quality. The second neural network may be an inference network for implementing a super resolution (SR) algorithm, which is capable of converting low-resolution (LR) images into high-resolution (HR) images. The image quality processing unit 910 may obtain a high-resolution image (second image) by performing image quality processing on the first image by using SR technology using deep learning.

The model training unit 920 according to one or more embodiments of the disclosure may perform on-device learning operation. The on-device learning operation may include an operation of adaptively training, on an input image, an image quality processing model for processing image quality of an input image.

The model training unit 920 may generate a model training unit 920 to be applied to the first image based on meta model information received from the server 100. The model training unit 920 may generate an updated model by training (transfer learning) the generated meta model by using a learning data set corresponding to the first image.

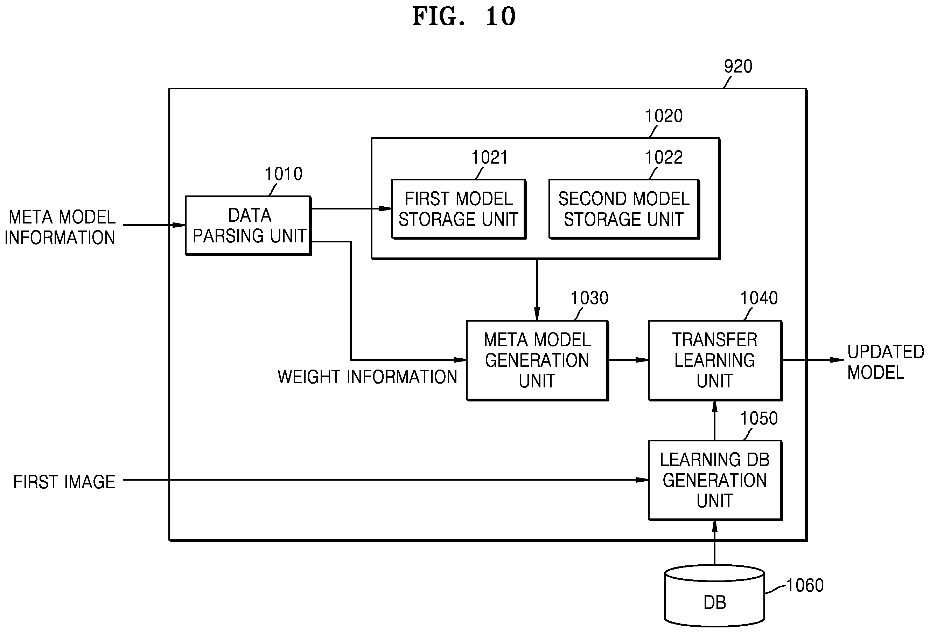

An operation in which the model training unit 920 according to one or more embodiments of the disclosure generates a meta model and an updated model is described below in detail with reference to FIG. 10.

The image quality processing unit 910 may load the updated model generated in the model training unit 920 and perform image quality processing on the first image by using the updated model.

The on-device learning operation according to one or more embodiments of the disclosure may be activated (operation ON) or deactivated (operation OFF). Activating or deactivating the on-device learning operation according to one or more embodiments of the disclosure may vary depending on the model specifications, capacity, performance, or the like of the image processing device 200. For example, when the image processing device 200 has a built-in large-capacity memory and a high-performance central processing unit (CPU), the image processing device 200 may activate the on-device learning operation and perform image quality processing on the first image by using an image quality processing model appropriately updated for the first image received from the server 100. Alternatively, the image processing device 200 may determine, based on a user input, whether to activate the on-device learning operation.

The model training unit 920 according to one or more embodiments of the disclosure may adaptively train the image quality processing model on the first image based on the fact that the on-device learning operation is activated. The image quality processing unit 910 may obtain the second image by performing image quality processing on the first image by using the updated model received from the model training unit 920.

When the on-device learning operation according to one or more embodiments of the disclosure is deactivated, the model training unit 920 may not obtain the updated model. The image quality processing unit 910 may perform image quality processing on the first image by using one model from among pre-stored reference models.

Alternatively, the model training unit 920 may obtain a meta model based on the meta model information according to one or more embodiments of the disclosure, but may omit a training process(transfer learning) using the learning data set corresponding to the first image. The image quality processing unit 910 may perform image quality processing on the first image by using the meta model.

FIG. 10 is a diagram for describing an operation of a model training unit according to one or more embodiments of the disclosure.

Referring to FIG. 10, the model training unit 920 according to one or more embodiments of the disclosure may include a data parsing unit 1010, a model storage unit 1020, a meta model generation unit 1030, a transfer learning unit 1040, and learning database (DB) generation unit 1050.

The model training unit 920 according to one or more embodiments of the disclosure may receive the first image and the meta model information. The meta model information may be input to the data parsing unit 1010.

The data parsing unit 1010 may parse the meta model information received from the server 100 and distinguish different data. For example, the data parsing unit 1010 may distinguish identification information of the first reference model, information about the second reference model, the meta model information, weight information, or the like included in the meta model information.

When the meta model information includes the information about the second reference model, the data parsing unit 1010 according to one or more embodiments of the disclosure may transmit the information about the second reference model information to a second model storage unit 1022. Alternatively, when the meta model information includes a meta model, the data parsing unit 1010 may store the meta model in the second model storage unit 1022.

The model training unit 920 according to one or more embodiments of the disclosure may include the model training unit 920 storing reference models, and may include a first model storage unit 1021 storing pre-trained reference models and the second model storage unit 1022 storing a reference model or meta model received from the server 100. However, the disclosure is not limited thereto, and the second model storage unit 1022 may not be included depending on the model specifications, capacity, performance, or the like of the image processing device 200.

When the meta model information includes the identification information of the first reference model, the data parsing unit 1010 according to one or more embodiments of the disclosure may transmit the identification information of the first reference model to the first model storage unit 1021. The first model storage unit 1021 may load, into the meta model generation unit 1030, a first reference model corresponding to the received identification information from among the pre-stored first reference models.

The data parsing unit 1010 according to one or more embodiments of the disclosure may transmit, to the meta model generation unit 1030, weight information applied to the reference model included in the meta model information.

The meta model generation unit 1030 according to one or more embodiments of the disclosure may generate a meta model based on at least one reference model loaded from the first model storage unit 1021 or the second model storage unit 1022 and weight information applied to the at least one reference model.

For example, the meta model generation unit 1030 may generate the meta model by applying a weight to each of the plurality of reference models and add the reference models (weighted sum) to which the weight is applied.

Alternatively, the meta model generation unit 1030 may obtain the meta model from the second model storage unit 1022.

The meta model generation unit 1030 may transmit the generated meta model to the transfer learning unit 1040.

The transfer learning unit 1040 according to one or more embodiments of the disclosure may train the meta model by using a learning data set received from the learning DB generation unit 1050.

For example, the learning DB generation unit 1050 according to one or more embodiments of the disclosure may obtain a learning data set corresponding to the first image by using the first image. To this end, the learning DB generation unit 1050 may identify a category of the first image. For example, the learning DB generation unit 1050 may analyze the first image and identify the category of the first image with a probability value. The learning DB generation unit 1050 may identify a category with the highest probability value as the category of the first image, and identify images belonging to the identified category from learning data stored in a DB 1060. The learning data may include high-quality images. The learning data may be stored in an external DB or in an internal memory.

The learning DB generation unit 1050 according to one or more embodiments of the disclosure may obtain a preset number of images from among images belonging to the same category as the first image. Alternatively, the learning DB generation unit 1050 may identify a preset number of categories in order of high probability value from among the categories of the first image, and obtain images belonging to the identified categories in proportion to the probability value. For example, the learning DB generation unit 1050 may, when it is determined that an object included in the first image has a 70 % probability of being a dog and a 30 % probability of being a cat, obtain a dog image and a cat image in a ratio of 7:3 in the learning data.

The learning DB generation unit 1050 according to one or more embodiments of the disclosure may obtain images with degraded quality by degrading images belonging to the identified category. The learning DB generation unit 1050 may process qualities of the images belonging to the identified category to correspond to the image quality of the first image. For example, the learning DB generation unit 1050 may generate an image with degraded image quality by performing at least one of compressing and degrading, blurring, adding noise, or down sampling on the images belonging to the identified category.

The learning DB generation unit 1050 according to one or more embodiments of the disclosure may use an image belonging to the identified category and an image with degraded image quality obtained by performing image quality processing on that image as a learning data set.

The learning DB generation unit 1050 according to one or more embodiments of the disclosure may transmit the learning data set to the transfer learning unit 1040.

The transfer learning unit 1040 according to one or more embodiments of the disclosure may train the meta model by using the learning data set received from the learning DB generation unit 1050.

For example, the transfer learning unit 1040 may train the meta model by using a gradient descent algorithm. Gradient descent is an optimization algorithm for finding first-order approximations, and is a method of obtaining a gradient of a function and finding the value of x when a function value is a minimum value by continuously moving toward a lower absolute value of the gradient.

The transfer learning unit 1040 according to one or more embodiments of the disclosure may compare an image output from the meta model by inputting an image with degraded quality included in the learning data set to the meta model with an image belonging to the identified category included in the learning data set, obtain a difference between the two images as a slope of a function, and obtain parameters of the model when an absolute value of the slope is minimized. In other words, the transfer learning unit 1040 may train the meta model by continuously updating the parameters of the meta model so that a quantitative difference between the image output from the meta model and the high-quality image included in the learning data set is minimized.

When different meta models are applied to a plurality of images, the transfer learning unit 1040 according to one or more embodiments of the disclosure may stabilize the meta model by considering a case in which a sudden change in image quality occurs. For example, the transfer learning unit 1040 may adjust a performance deviation of the updated meta model for each frame image. The transfer learning unit 1040 may stabilize the meta model by using a method of averaging the parameters of the meta models of the frame images. The transfer learning unit 1040 may average the meta models by using a simple moving average or exponential moving average method. However, the disclosure is not limited thereto.

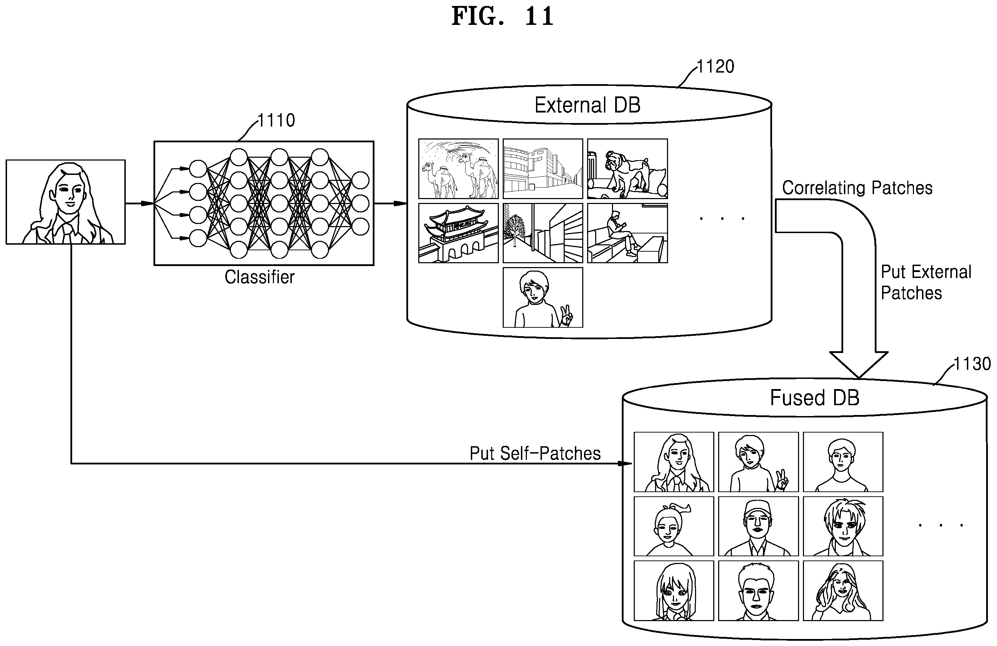

FIG. 11 is a diagram for describing an operation of obtaining, by a learning DB generation unit, images of a category similar to a category of the first image, according to one or more embodiments of the disclosure.

Referring to FIG. 11, the learning DB generation unit 1050 may generate a learning DB by selectively collect, from an external DB 1120, images having similar content characteristics to content characteristics of the first image.

The learning DB generation unit 1050 according to one or more embodiments of the disclosure may identify the category of the first image.

The learning DB generation unit 1050 according to one or more embodiments of the disclosure may identify the category of the first image by using a third neural network 1110. The third neural network 1110 according to one or more embodiments of the disclosure may be an algorithm that receives images and classifies image categories from the input images, or a set of algorithms, software for executing a set of algorithms, and/or hardware for executing a set of algorithms.

The third neural network 1110 according to one or more embodiments of the disclosure may use a softmax regression function to obtain various classes or categories as a result. The softmax function may be used when there are a plurality of correct answers (classes) that must be classified, that is, when predicting a plurality of classes. When a total number of classes is k, the softmax function may receive a k-dimensional vector and estimate a probability for each class. The third neural network 1110 according to one or more embodiments of the disclosure may be a neural network that receives a k-dimensional vector and is trained such that the probability for each class obtained therefrom is equal to a correct answer set. However, the disclosure is not limited thereto, and the third neural network 1110 may be implemented as algorithms of various types capable of classifying image categories from an input image.

The third neural network 1110 according to one or more embodiments of the disclosure may obtain a probability value for a category or class of the input first image as a result. For example, the third neural network 1110 may obtain vectors representing the probability that the category of the first image is a human face, a dog, a cat, and a building as 0.5, 0.2, 0.2, and 0.1, respectively, as the result value.

The learning DB generation unit 1050 according to one or more embodiments of the disclosure may identify a category with the highest probability as the category of the first image. For example, in the example above, the learning DB generation unit 1050 may identify the category of the first image as the human face, which is the category with the greatest vector value.

The learning DB generation unit 1050 according to one or more embodiments of the disclosure may obtain images with content characteristics similar to the content characteristics of the first image, that is, images included in the same or similar category as the first image. The learning DB generation unit 1050 according to one or more embodiments of the disclosure may obtain, from the external DB 1120, the image included in a category similar to the category of the first image. However, the disclosure is not limited thereto, and the learning DB generation unit 1050 may obtain an image included in a category similar to the category of the first image from among learning images stored in an internal memory of the image processing device 200, rather than in the external DB 1120.

Images having categories of various types may be labeled with an index or tag for a category of each image and stored in the embodiment of the disclosure or the internal memory according to one or more embodiments of the disclosure.

Referring to FIG. 11, the learning DB generation unit 1050 may obtain, from the external DB 1120, one or more images that are identified by an index of a category similar to the category of the first image, and generate a new DB 1130 including the one or more images.

The learning DB generation unit 1050 according to one or more embodiments of the disclosure may identify only a category with the highest probability value from among the categories of the first image, and obtain images belonging to the identified category. For example, in the example above, the learning DB generation unit 1050 may obtain, from the external DB 1120, only an image of the human face with the highest probability value.

Alternatively, the learning DB generation unit 1050 may identify only a predetermined number of categories in order of high probability value from among the categories of the first image, and obtain images belonging to the identified category in proportion to the probability value. For example, in the example described above, the learning DB generation unit 1050 may identify only three categories in order of high probability value. For example, the learning DB generation unit 1050 may identify a human face, a dog, and a cat as categories of an input image, and obtain a human face image, a dog image, and a cat image at a ratio of 5:2:2 from the external DB 1120.

The learning DB generation unit 1050 according to one or more embodiments of the disclosure may also include the first image in the new DB 1130.

In FIG. 11, it is assumed that the human face, which has the highest probability value, is identified as the category of an input image. The learning DB generation unit 1050 may obtain N various human face images from the external DB 1120 and generate the new DB 1130 including the N various human face images. Here, the N human face images may be different images.

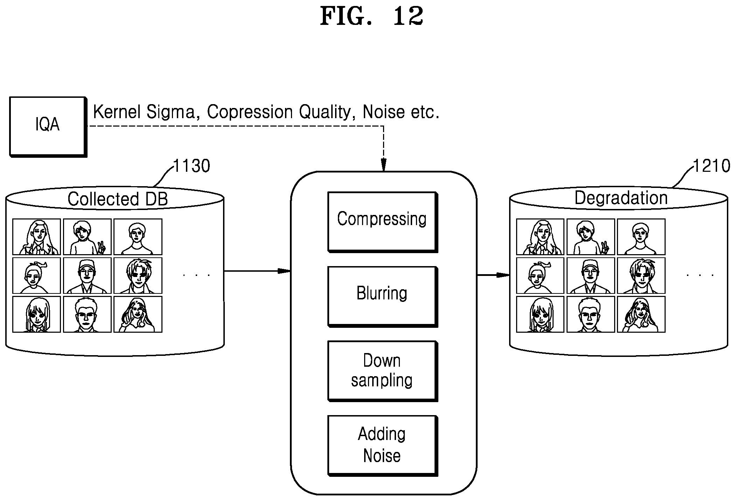

FIG. 12 is a diagram for describing an operation of generating a learning data set by a learning DB generation unit, according to one or more embodiments of the disclosure.

Referring to FIG. 12, the learning DB generation unit 1050 according to one or more embodiments of the disclosure may degrade images included in the new DB 1130 to degrade image quality.

The learning DB generation unit 1050 according to one or more embodiments of the disclosure may degrade the images included in the new DB 1130 to match quality characteristics of the first image.

The learning DB generation unit 1050 according to one or more embodiments of the disclosure may receive quality information of the first image and degrade collected images to have quality information corresponding thereto. In this case, the quality information of the first image may be quality information obtained by analyzing or evaluating the image quality of the first image in the server 100. Alternatively, the quality information of the first image may be quality information obtained by analyzing or evaluating the image quality of the first image in the image processing device 200.

The quality information of the first image according to one or more embodiments of the disclosure may include kernel sigma representing a degree of blur of the first image and a QF representing a degree of compression degradation of the first image. The learning DB generation unit 1050 may degrade the images included in the new DB 1130 to have the same degree of blur and compression degradation as the first image.

For example, the learning DB generation unit 1050 may perform filtering to degrade the images included in the new DB 1130. The learning DB generation unit 1050 may use a two-dimensional kernel to cause blur degradation in the images. Alternatively, the learning DB generation unit 1050 may process box blur to model motion degradation. Alternatively, the learning DB generation unit 1050 may use a Gaussian filter to provide shape or optical blur.

The learning DB generation unit 1050 according to one or more embodiments of the disclosure may adjust coefficients of the filter to match the blur of the first image.

Degradation is performed through commonly known spatial filtering, which may be identical to an operation of a low-pass filter in signal processing. Specifically, degradation may be performed through convolution operation with a two-dimensional (2D) Gaussian Kernel.

The learning DB generation unit 1050 according to one or more embodiments of the disclosure may use the images included in the new DB 1130 and degraded images 1210 generated by degrading the image quality of the images as a learning data set.

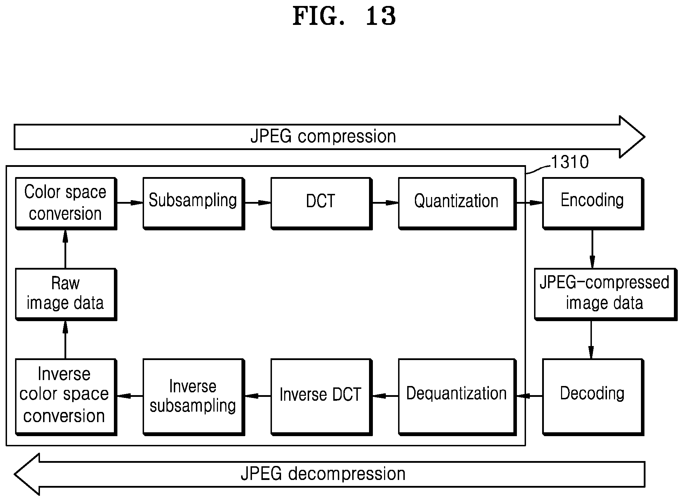

FIG. 13 is a diagram for describing a method of reflecting deterioration occurring during a compression process in a learning image, according to one or more embodiments of the disclosure.

An amount of multimedia data, including video, is enormous and requires a wide bandwidth when transmitted. For example, uncompressed images with a resolution of 4 K or higher requires a high bandwidth that makes mid-to long-distance transmission impossible. A 4 K 60 FPS uncompressed image with 3840 x 2160 resolution, the standard ultra-high-definition (UHD) broadcast resolution, requires a very high bandwidth of 11,384 Bbps per second. To transmit such large amounts of data, it is essential to encode the image by using a compression coding technique. The image may be compressed by using various compression format methods. For example, the image may be compressed by using various compression format methods such as Joint Photographic Experts Group (JPEG), Moving Picture Experts Group 2 (MPEG2), H.264, or High Efficiency Video Coding (HEVC). The image may lose information during the compression process, causing distortion.

Encoded image data may be generated in a predetermined format specified by each video codec and transmitted to a decoding device, and the decoding device may decode an image sequence and output the image data. Due to the loss of information again when the image is reconstructed during the decoding process, the compressed image may be degraded.

The learning DB generation unit 1050 according to one or more embodiments of the disclosure may reflect degradation occurring in the compression process from among various types of degradation, and generate a compressed degraded image.

The learning DB generation unit 1050 according to one or more embodiments of the disclosure may compress and degrade the images included in the new DB 1130 and generate the compressed and degraded images. To this end, the learning DB generation unit 1050 may encode/decode the images included in the new DB 1130 and generate the compressed and degraded images. For example, for still images, the learning DB generation unit 1050 may degrade the still images by using a JPEG compression method. In addition, for moving images, the learning DB generation unit 1050 may compress and degrade the moving images by using compression methods such as MPEG2, H.264, and HEVC.

FIG. 13 sequentially shows a JPEG encoding and decoding process for an image. Referring to FIG. 13, raw image data may be encoded into a JPEG compressed image through color conversion, frequency conversion (DCT), quantization, and arithmetic coding in that order. The encoded image may be reconstructed through decoding, dequantization, inverse DCT, and inverse color conversion processes.

The learning DB generation unit 1050 according to one or more embodiments of the disclosure may obtain a compressed and degraded image by JPEG encoding and decoding an image to be degraded in the order shown in FIG. 13.

Because entropy coding performed in the encoding/decoding process is a lossless compression method, quality degradation does not occur in the entropy coding and entropy decoding processes. Accordingly, the learning DB generation unit 1050 according to one or more embodiments of the disclosure may omit the entropy coding and entropy decoding processes for the image to be degraded and perform only methods indicated by reference numeral 1310, to obtain the compressed degraded image.

The learning DB generation unit 1050 according to one or more embodiments of the disclosure may position the image to be degraded in the place of raw image data, perform color conversion, DCT, and quantization on the image to be degraded, and perform dequantization, inverse DCT, and inverse color conversion on the quantized image, to obtain the compressed degraded image.

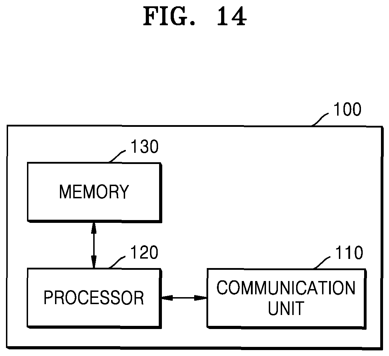

FIG. 14 is a block diagram illustrating a configuration of a server according to one or more embodiments of the disclosure.

Referring to FIG. 14, a server according to one or more embodiments of the disclosure may include a communication unit 110 (i.e. communication interface), a processor 120, and a memory 130.

The communication unit 110 according to one or more embodiments of the disclosure may transmit and receive data or signals to and from an external device or a server. For example, the communication unit 110 may include a wireless fidelity (Wi-Fi) module, a Bluetooth module, an infrared communication, a wireless communication module, a local area network (LAN) module, an Ethernet module, a wired communication module, or the like. In this case, each of the communication modules may be implemented in the form of at least one hardware chip.

The Wi-Fi module and the Bluetooth module may perform communication by using Wi-Fi and Bluetooth methods, respectively. When the Wi-Fi module or the Bluetooth module is used, various connection information such as a service set identifier (SSID) and a session key is first transmitted and received, and various information may be transmitted and received after establishing a communication connection by using the connection information. Wireless communication modules may include at least one communication chip that performs communication according to various wireless communication standards such as ZigBee, 3rd Generation (3G), 3rd Generation Partnership Project (3GPP), Long Term Evolution (LTE), LTE Advanced (LTE-A), 4th Generation (4G), and 5th Generation (5G).

The communication unit 110 according to one or more embodiments of the disclosure may receive a request for the first image from the image processing device 200. In addition, the communication unit 110 according to one or more embodiments of the disclosure may transmit the first image, meta model information, and quality information of the first image to the image processing device 200 according to one or more embodiments of the disclosure.

The processor 120 according to one or more embodiments of the disclosure may perform functions of controlling an overall operation of the server 100 and signal flow between internal components of the server 100, and processing data.

The processor 120 may include single core, dual core, triple core, quad core, and multiple cores thereof. In addition, the processor 120 may include a plurality of processors. For example, the processor 120 may be implemented as a main processor and a sub processor.

In addition, the processor 120 may include at least one of a CPU, a graphics processing unit (GPU), or a video processing unit (VPU). Alternatively, depending on the embodiment, the processor 120 may be implemented in the form of a system on chip (SoC) integrating at least one of CPU, GPU, or VPU. Alternatively, the processor 120 may further include a neural processing unit (NPU).

The memory 130 according to one or more embodiments of the disclosure may store various data, programs, or applications for driving and controlling the server 100.

In addition, a program stored in the memory 130 may include one or more instructions. The program (one or more instructions) or the applications stored in the memory 130 may be executed by the processor 120.

The processor 120 according to one or more embodiments of the disclosure may include the image compression unit 410, the image quality analysis unit 420, and the meta model acquisition unit 430 of FIG. 4, and may perform operations of the image compression unit 410, the image quality analysis unit 420, and the meta model acquisition unit 430.

The processor 120 according to one or more embodiments of the disclosure may execute the one or more instructions stored in the memory 130 to obtain the first image by compressing an original image. The processor 120 may obtain a plurality of compressed image data having different resolutions or different bit rates for the same original image, and store the plurality of obtained compressed image data in the memory 130. For example, the compressed image data may include image data with resolutions of 8 k, 4 k, full high definition (HD; FHD), and HD for the same content. Alternatively, the compressed image data may include a plurality of compressed image data having bit rates of 40 Mbps, 30 Mbps, 20 Mbps, and 10 Mbps for the same original image. However, the disclosure is not limited thereto.

The processor 120 according to one or more embodiments of the disclosure may determine image data (first image) to be transmitted to the image processing device from among the plurality of compressed image data according to a status of a network connected to the image processing device 200 according to one or more embodiments of the disclosure. For example, the status of the network may be determined according to a degree of traffic generation in a transmission/reception path between the server 100 and the image processing device 200.

Alternatively, the processor 120 may determine image data (first image) to be transmitted to the image processing device from among the plurality of compressed image data at the request of the image processing device 200.

The processor 120 according to one or more embodiments of the disclosure may execute the one or more instructions stored in the memory 130 to analyze image quality of the first image and obtain quality information. For example, the processor 120 may determine the image quality or quality of the first image. The image quality of the image may represent a degree of image deterioration. The processor 120 may determine evaluate or determine at least one of compression deterioration of the first image, a sharpness degree of the first image, a degree of blur, a degree of noise, or a resolution of the image.

The processor 120 according to one or more embodiments of the disclosure may analyze or evaluate the image quality of the first image by using a first neural network, which is trained to analyze or evaluate the image quality of the first image. For example, the first neural network may be a neural network trained to evaluate image quality or video quality by using image quality assessment (IQA) technology, video quality assessment (VQA) technology, or the like.

For example, the processor 120 may obtain a kernel signal value representing blur quality of an image and a quality factor (QF) representing compression quality of the image as quality information by using the first neural network. However, the disclosure is not limited thereto.

When the first image is one of a plurality of frame images included in video content, the processor 120 according to one or more embodiments of the disclosure may obtain quality information of the first image based on quality information for each of the plurality of frame images.

For example, the processor 120 may determine whether there is an abnormality in a quality value of the first image based on quality values of each of the plurality of frame images, and when there is an abnormality, the processor 120 may not use the corresponding value. The processor 120 may determine whether the quality value of the first image is abnormal based on an average value and standard deviation of the quality values of the plurality of frame images. This is described in detail with reference to FIG. 6, and redundant descriptions thereof are omitted.

The processor 120 according to one or more embodiments of the disclosure may execute the one or more instructions stored in the memory 130 to obtain a meta model based on the obtained quality information.

For example, the processor 120 may obtain a meta model by using at least one reference model. The reference model is an image quality processing model pre-trained by using a learning image and may include first reference models stored in the image processing device 200 and second reference models stored in the server 100.

The processor 120 according to one or more embodiments of the disclosure may generate the second reference models for image quality processing of the first image. For example, the processor 120 may generate the second reference models by training an image processing model by using learning images having quality information similar to the quality information of the first image.

Alternatively, the pre-trained first reference model may be stored in the image processing device 200 by using learning images having various quality information.

The processor 120 according to one or more embodiments of the disclosure may search for a reference model corresponding to a learning image having quality information similar to the quality information of the first image by comparing the quality information of the learning images corresponding to each of the plurality of reference models with the quality information of the first image.

The processor 120 according to one or more embodiments of the disclosure may search for a plurality of reference models and perform a weighted sum of the plurality of reference models by applying a weight to each of the plurality of reference models, thereby obtaining a meta model. In this case, the weight applied to each of the plurality of reference models may be determined based on a difference between quality information of a learning image corresponding to a reference model and the quality information of the first image.

The meta model information according to one or more embodiments of the disclosure may include information about at least one reference model, information about a weight applied to at least one reference model, an obtained meta model, or the like.

For example, when the meta model is obtained by using the first reference model, the information about the at least one reference model may include identification information of the first reference model. Alternatively, when the meta model is obtained by using the second reference model, the information about the at least one reference model may include the second reference model.

The processor 120 according to one or more embodiments of the disclosure may execute the one or more instructions stored in the memory 130 to control the communication unit 110 to transmit the meta model information and the first image to the image processing device 200.

For example, when the meta model is obtained by using second reference models, the communication unit 110 may transmit the obtained meta model or the second reference models to the image processing device 200. Alternatively, when the meta model is obtained based on the first reference models, the communication unit 110 may transmit identification information (e.g., a model number or the like) about the first reference models to the image processing device 200.

In addition, the communication unit 110 may transmit, to the image processing device 200, the information about the weight applied to each of the plurality of reference models for obtaining the meta model.

In addition, the communication unit 110 may transmit, to the image processing device 200, the quality information of the first image obtained from the server.

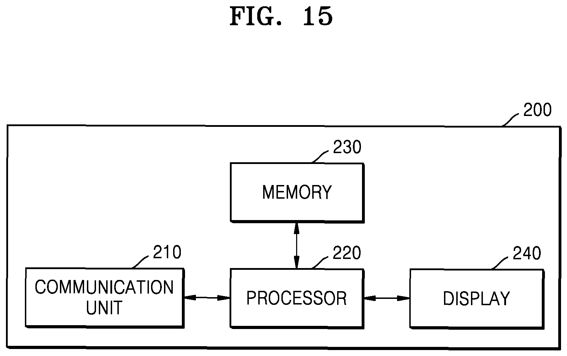

FIG. 15 is a block diagram illustrating a configuration of an image processing device according to one or more embodiments of the disclosure.

Referring to FIG. 15, the image processing device 200 according to one or more embodiments of the disclosure may include a communication unit 210, a processor 220, a memory 230, and a display 240.

The communication unit 210 according to one or more embodiments of the disclosure may transmit and receive data or signals to and from an external device or a server. For example, the communication unit 210 may include a Wi-Fi module, a Bluetooth module, an infrared communication, a wireless communication module, a LAN module, an Ethernet module, a wired communication module, or the like. In this case, each of the communication modules may be implemented in the form of at least one hardware chip.

The Wi-Fi module and the Bluetooth module may perform communication by using Wi-Fi and Bluetooth methods, respectively. When the Wi-Fi module or the Bluetooth module is used, various connection information such as a SSID and a session key is first transmitted and received, and various information may be transmitted and received after establishing a communication connection by using the connection information. Wireless communication modules may include at least one communication chip that performs communication according to various wireless communication standards such as ZigBee, 3G, 3GPP, LTE, LTE-A, 4G, and 5G.

The communication unit 210 according to one or more embodiments of the disclosure may request for the first image (image content or video content) to the server 100. In addition, the communication unit 210 according to one or more embodiments of the disclosure may receive the first image, the meta model information, and the quality information of the first image from the server 100.

The processor 220 according to one or more embodiments of the disclosure may perform functions of controlling an overall operation of the image processing device 200 and signal flow between internal components of the image processing device 200, and processing data.

The processor 220 may include single core, dual core, triple core, quad core, and multiple cores thereof. In addition, the processor 220 may include a plurality of processors. For example, the processor 220 may be implemented as a main processor and a sub processor.

In addition, the processor 220 may include at least one of a CPU, a GPU, or a VPU. Alternatively, depending on the embodiment, the processor 120 may be implemented in the form of a SoC integrating at least one of CPU, GPU, or VPU. Alternatively, the processor 220 may further include a NPU.

The memory 230 according to one or more embodiments of the disclosure may store various data, programs, or applications for driving and controlling the image processing device 200.

In addition, a program stored in the memory 230 may include one or more instructions. The program (one or more instructions) or the applications stored in the memory 230 may be executed by the processor 220.

The processor 220 according to one or more embodiments of the disclosure may include the image quality processing unit 910 and the model training unit 920 of FIG. 9, and may perform operations of the image quality processing unit 910 and the model training unit 920.

The processor 220 according to one or more embodiments of the disclosure may execute the one or more instructions stored in the memory 130 to generate a meta model based on the meta model information received from the server 100. For example, when the meta model information includes identification information of a first reference model, the processor 220 according to one or more embodiments of the disclosure may load the first reference model pre-stored in the memory 230 corresponding to the identification information of the first reference model. In addition, when the meta model information includes information about a second reference model or the meta model, the processor 220 may store the second reference model or the meta model in the memory 230.

The processor 220 may generate a meta model by applying a weight included in the meta model information to the first reference model or the second reference model. For example, the processor 220 may apply a weight to each of the plurality of reference models and add the weighted reference models (weighted sum) to generate the meta model. However, the disclosure is not limited thereto.

The processor 220 according to one or more embodiments of the disclosure may execute the one or more instructions stored in the memory 130 to train the meta model by using a learning data set corresponding to the first image.

For example, the processor 220 may obtain the learning data set corresponding to the first image by using the first image. The processor 220 may identify a category of the first image and identify an image belonging to the identified category from learning data stored in a DB. The learning data may include high-quality images. The learning data may be stored in an external DB or the internal memory 230.

The processor 220 according to one or more embodiments of the disclosure may generate an image with degraded image quality by performing at least one of compressing and degrading, blurring, adding noise, or down sampling on the selected learning images.

The processor 220 according to one or more embodiments of the disclosure may train the meta model by using the selected learning images and the images with degraded image quality obtained by performing image quality processing on the learning images as a learning data set. For example, the processor 220 may input the image with degraded quality included in the learning data set to the meta model and update parameters of the meta model so that a difference between the image output from the meta model and a high-quality learning image included in the learning data set is minimized.

The processor 220 according to one or more embodiments of the disclosure may execute the one or more instructions stored in the memory 130 to obtain a second image obtained by performing image quality processing on the first image, based on the trained meta model.

The trained meta model (updated model) according to one or more embodiments of the disclosure may include a neural network trained to process image quality of an input image. For example, the trained meta model may be a model trained to process low-resolution or low-quality images into high-resolution or high-quality images. The second image according to one or more embodiments of the disclosure may be an image with higher resolution or higher quality than the first image.

The display 240 according to one or more embodiments of the disclosure may generate a driving signal by converting image signals, data signals, on-screen display (OSD) signals, and control signals processed by the processor 220. The display 240 may be implemented as a plasma display panel (PDP), a liquid-crystal display (LCD), an organic light-emitting diode (OLED), a flexible display, or the like, and may also be implemented as a three-dimensional (3D) display. In addition, the display 240 may be configured as a touch screen and used as an input device in addition to an output device.

The display 240 according to one or more embodiments of the disclosure may display the second image obtained by performing image quality processing on the first image.

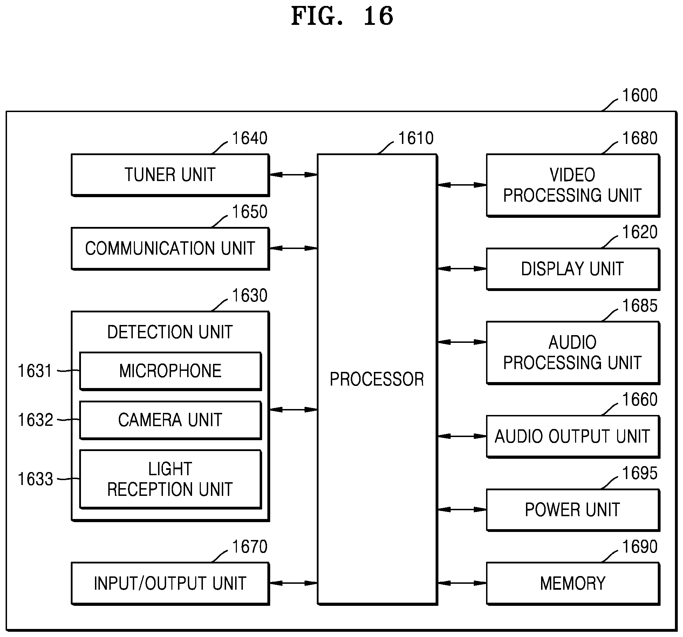

FIG. 16 is a block diagram illustrating a configuration of an image processing device according to one or more embodiments of the disclosure.

An image processing device 1600 of FIG. 16 may be an example of the image processing device 200 of FIGS. 1 and 15.

Referring to FIG. 16, the image processing device 1600 may include a tuner unit 1640, a processor 1610, a display unit 1620, a communication unit 1650, a detection unit 1630, an input/output unit 1670, a video processing unit 1680, an audio processing unit 1685, an audio output unit 1660, a memory 1690, and a power unit 1695.

The communication unit 1650 of FIG. 16 may correspond to the communication unit 210 of FIG. 15, the processor 1610 of FIG. 16 may correspond to the processor 220 of FIG. 15, the memory 1690 of FIG. 16 may correspond to the memory 230 of FIG. 15, and the display unit 1620 of FIG. 16 may correspond to the display 240 of FIG. 15. Thus, the same content as described above is omitted.

The tuner unit 1640 according to one or more embodiments of the disclosure may select a broadcast signal received by wire or wirelessly by tuning only a frequency of a channel to be received from the image processing device 1600 through amplification, mixing, resonance, or the like from among many radio wave components. The broadcast signal may include audio, video, and additional information (e.g., electronic program guide (EPG)).

The tuner unit 1640 may receive broadcast signals from various sources such as terrestrial broadcasting, cable broadcasting, satellite broadcasting, and Internet broadcasting. The tuner unit 1640 may also receive broadcasting signals from sources such as analog broadcasting or digital broadcasting.

The communication unit 1650 according to one or more embodiments of the disclosure may receive control signals or control commands from an external control device. For example, the communication unit 1650 may include an infrared (IR) module capable of transmitting and receiving signals to and from an external control device according to an IR communication standard. Specifically, the communication unit 1650 may receive, from a control device, a control signal or control command corresponding to a user input (e.g., a key or button input of the control device, or the like).

The detection unit 1630 according to one or more embodiments of the disclosure may detect a user's voice, a user's image, or a user's interaction, and may include a microphone 1631, a camera unit 1632, and a light reception unit 1633.

The microphone 1631 may receive a user's uttered voice. The microphone 1631 may convert the received voice into an electrical signal and output the converted voice to the processor 1610. For example, the user's voice may include a voice corresponding to a menu or function of the image processing device 1600. For example, the microphone 1631 may receive a user's voice corresponding to a display rotation command, convert the received voice into an electrical signal, and output the converted voice to the processor 1610.

The camera unit 1632 may receive an image (e.g., consecutive frames) corresponding to a user's motion, including gestures, within a camera recognition range. The processor 1610 may select a menu displayed on the image processing device 1600 by using a recognition result of the received motion, or perform control corresponding to the motion recognition result. For example, the processor 1610 may receive an image from the camera unit 1632 and recognize a user's motion corresponding to a rotation of the display from the received image, and rotate the display in response thereto.

The light reception unit 1633 may receive optical signals (including control signals) received from an external control device through a light window of a bezel of the display unit 1620. The light reception unit 1633 may receive an optical signal corresponding to a user input (e.g., touch, press, touch gesture, voice, or motion) from the control device. A control signal may be extracted from the received optical signal under the control by the processor 1610.

The input/output unit 1670 according to one or more embodiments of the disclosure may receive video (e.g., moving image or the like), audio (e.g., voice, music, or the like), and additional information (e.g., EPG or the like) from the outside of the image processing device 1600. The input/output unit 1670 may include any of a high-definition multimedia interface (HDMI), a mobile high-definition link (MHL), a universal serial bus (USB), a display port (DP), a thunderbolt, a video graphics array (VGA) port, an RGB port, a D-subminiature (D-SUB), a digital visual interface (DVI), a component jack, and a personal computer (PC) port.

The processor 1610 may perform functions of controlling an overall operation of the image processing device 1600 and signal flow between internal components of the image processing device 1600, and processing data. When there is a user input or a preset and stored condition is satisfied, the processor 1610 may execute an operating system (OS) and various applications stored in the memory 1690.

The processor 1610 may include a random-access memory (RAM) storing signals or data received from the outside of the image processing device 1600 or used as a storage area corresponding to various tasks performed in the image processing device 1600, a read-only memory (ROM) storing a control program for controlling the image processing device 1600, and a processor.

The video processing unit 1680 may perform processing on video data received by the image processing device 1600. The video processing unit 1680 may perform various image processing such as decoding, scaling, noise filtering, frame rate conversion, or resolution conversion on video data.

The audio processing unit 1685 may perform processing on audio data. The audio processing unit 1685 may perform various processing such as decoding, amplification, or noise filtering on the audio data. Meanwhile, the audio processing unit 1685 may include a plurality of audio processing modules to process audio corresponding to a plurality of items of content.

The audio output unit 1660 may output audio included in the broadcast signal received through the tuner unit 1640 under the control by the processor 1610. The audio output unit 1660 may output audio (e.g., voice or sound) received via the communication unit 1650 or the input/output unit 1670. In addition, the audio output unit 1660 may output audio stored in the memory 1690 under the control by the processor 1610. The audio output unit 1660 may include at least one of a speaker, a headphone output terminal, or a Sony/Philips Digital Interface (S/PDIF) output terminal.

The power unit 1695 may supply power received from an external power source to internal elements of the image processing device 1600 under the control by the processor 1610. In addition, the power unit 1695 may supply power output from one or more batteries positioned within the image processing device 1600 to the internal elements under the control by the processor 1610.

The memory 1690 may store various data, programs, or applications for driving and controlling the image processing device 1600 under the control by the processor 1610. The memory 1690 may include a broadcast reception module, a channel control module, a volume control module, a communication control module, a speech recognition module, a motion recognition module, a light reception module, a display control module, an audio control module, an external input control module, a power control module, a power control module of an external device connected wirelessly (e.g., via Bluetooth), a voice DB, or a motion DB. The modules and DBs of the memory 1690 may be implemented in a software form to perform a broadcast reception control function, a channel control function, a volume control function, a communication control function, a speech recognition function, a motion recognition function, a light reception control function, a display control function, an audio control function, an external input control function, a power control function, or a power control function of an external device connected wirelessly (e.g., via Bluetooth) in the display device 1600. The processor 1610 may perform the respective functions by using these software stored in the memory 1690.

Meanwhile, the block diagrams of the server 100, the image processing devices 200 and 1600 shown in FIGS. 14 to 16 are block diagrams for one or more embodiments of the disclosure. Each element of the block diagrams may be integrated, added, or omitted depending on the specifications of the server 100 and the image processing devices 200 and 1600. In other words, if necessary, two or more elements may be combined into one element, or one element may be subdivided into and configured as two or more elements. In addition, functions performed by each block are for describing embodiments, and detailed operations or devices do not limit the scope of the disclosure.

A server according to one or more embodiments of the disclosure may include a communication unit, a memory storing one or more instructions, and at least one processor configured to execute the one or more instructions.

The at least one processor may be configured to execute the one or more instructions to obtain a first image by compressing an original image.

The at least one processor may be configured to execute the one or more instructions to analyze image quality of the first image and obtain quality information of the first image.

The at least one processor may be configured to execute the one or more instructions to obtain meta model information of a meta model used for quality processing of the first image based on the quality information.

The at least one processor may be configured to execute the one or more instructions to control the communication unit to transmit the meta model information and the first image to an image processing device.

The first image may include a plurality of frame images included in video content.

The at least one processor may be configured to execute the one or more instructions to obtain quality information of a frame image at a first time from among the plurality of frame images based on overall quality information of the plurality of frame images.

The at least one processor may be configured to execute the one or more instructions to set a quality upper bound value and a quality lower bound value based on a quality average value and standard deviation of the plurality of frame images.

The at least one processor may be configured to execute the one or more instructions to determine a quality value of the frame image at the first time point based on the quality upper bound value and the quality lower bound value.

The at least one processor may be configured to execute the one or more instructions to control the communication unit to transmit the quality information to the image processing device.

The meta model may be obtained based on at least one reference model.

The meta model information may include information about the at least one reference model and a weight applied to the at least one reference model.

The at least one processor may be configured to execute the one or more instructions to determine the at least one reference model and weights applied to the at least one reference model based on the quality information.

The at least one processor may be configured to execute the one or more instructions to determine the weights based on a difference between quality information corresponding to the at least one reference model and quality information of the first image.

The at least one reference model may include a first reference model pre-stored in the server or a second reference model pre-stored in the image processing device.

The at least one processor may be configured to execute the one or more instructions to generate the first reference model corresponding to the first image based on the first image.

The at least one processor may be configured to execute the one or more instructions to select the first reference model or the second reference model based on the quality information.

The at least one processor may be configured to execute the one or more instructions to control the communication unit to transmit, to the image processing device, information about the selected first reference model or identification information of the selected second reference model.

An image processing device according to one or more embodiments of the disclosure may include a communication unit, a memory storing one or more instructions, and at least one processor configured to execute the one or more instructions.

The at least one processor may be configured to execute the one or more instructions to control the communication unit to receive a first image and meta model information from a server.

The at least one processor may be configured to execute the one or more instructions to generate a meta model based on the meta model information.

The at least one processor may be configured to execute the one or more instructions to train the meta model by using a learning data set corresponding to the first image.

The at least one processor may be configured to execute the one or more instructions to obtain a second image based on the trained meta model, the second image being obtained by performing image quality processing on the first image.

The at least one processor may be configured to execute the one or more instructions to generate the meta model based on information about at least one reference and information about a weight applied to the at least one reference model, included in the meta model.

The at least one processor may be configured to execute the one or more instructions to obtain quality information of the first image.

The at least one processor may be configured to execute the one or more instructions to generate the learning data set by degrading images classified into the same category as the first image based on the quality information of the first image.

An operating method of a server, according to one or more embodiments of the disclosure, may include obtaining a first image by compressing an original image.

The operating method of the server may include obtaining quality information of the first image by analyzing image quality of the first image.

The operating method of the server may include obtaining, based on the quality information, meta model information of a meta model used for performing image quality processing on the first image.

The operating method of the server may include transmitting the meta model information and the first image to an image processing device.

The first image may include a plurality of frame images included in video content.

The obtaining of the quality information of the first image may include obtaining quality information of a frame image at a first time point from among the plurality of frame images based on overall quality information of the plurality of frame images.

The obtaining of the quality information of the first image may include setting a quality upper bound value and a quality lower bound value based on a quality average value and standard deviation of the plurality of frame images.

The obtaining of the quality information of the first image may include determining a quality value of the frame image of the first time point based on the quality upper bound and the quality lower bound value.

The operating method may further include transmitting the quality information to the image processing device.

The meta model may be obtained based on at least one reference model.

The meta model information may include information about the at least one reference model and a weight applied to the at least one reference model.

The obtaining of the meta model information may include determining, based on the quality information, the at least one reference model and the weight applied to the at least one reference model.

The determining of the weight applied to the at least one reference model may include determining the weight based on a difference between quality information corresponding to the at least one reference model and the quality information of the first image.

The at least one reference model may include a first reference model pre-stored in the server or a second reference model pre-stored in the image processing device.

The operating method of the server may further include generating, based on the first image, the first reference model corresponding to the first image.

The obtaining of the meta model information may include selecting the first reference model or the second reference model based on the quality information.

The transmitting of the meta model information may include transmitting, the image processing device, information about the selected first reference model or identification information of the selected second reference model.

A server according to one or more embodiments of the disclosure may determine the quality information of the first image by analyzing not only image quality of the first image (input image) but also overall image quality of content including the first image, thereby improving the accuracy of image quality analysis.

An image quality processing model adaptive to an input image may be obtained and image quality processing may be performed on the input image by using the obtained image quality processing model, thereby improving the image quality processing performance of the image processing device.

An operating method of the server and an operating method of the image processing device, according to one or more embodiments of the disclosure, may be implemented in the form of program commands that may be performed through various computer means, and recorded on a computer-readable medium. The computer-readable recording medium may include program commands, data files, data structures, and the like separately or in combinations. The program commands recorded on the computer-readable recording medium may be specially designed and configured for the disclosure or may be well-known to and be usable by one of ordinary skill in the art of computer software. Examples of the computer-readable recording medium include a magnetic medium such as a hard disk, a floppy disk, or a magnetic tape, an optical medium such as a compact disc ROM (CD-ROM) or a Digital Video Disc (DVD), a magneto-optical medium such as a floptical disk, and a hardware device specially configured to store and execute program commands such as a ROM, a RAM, or a flash memory. Examples of the program commands include high-level language code that may be executed by a computer by using an interpreter or the like as well as machine language code made by a compiler.

In addition, the operating method of the server and the operating method of the image processing device, according to the embodiments of the disclosure, may be provided in a computer program product. The computer program product is a product that may be traded between a seller and a buyer.

The computer program product may include a software (S/W) program and a computer-readable storage medium in which the S/W program is stored. For example, the computer program product may include an S/W program-type product (e.g., a downloadable application) electronically distributed through a manufacturer of the electronic device or an electronic market (e.g., Google Play™ store or App Store). For electronic distribution, at least a portion of the S/W program may be stored in a storage medium or temporarily generated. In this case, the storage medium may be a server of the manufacturer, a server of the electronic market, or a storage medium of a relay server that temporarily stores the S/W program.

In a system including a server and a client device, the computer program product may include a storage medium of the server or a storage medium of the client device. Alternatively, when there is a third device (e.g., a smartphone) connected to the server or the client device for communication, the computer program product may include a storage medium of the third device. Alternatively, the computer program product may directly include an S/W program transmitted from the server to the client device or the third device or transmitted from the third device to the client device.

In this case, one of the server, the device, and the client device may execute the computer program product to perform the method according to the embodiments of the disclosure. Alternatively, two or more of the server, the client device, and the third device may execute the computer program product to perform the method according to the embodiments of the disclosure in a distributed fashion.

For example, the server (e.g., a cloud server or an artificial intelligence (AI) server) may execute the computer program product stored therein to control the client device communicatively connected to the server to perform the method according to the embodiments of the disclosure.

Although the embodiments are described in detail above, the scope of the disclosure is not limited thereto, and various modifications and improvements made by those skilled in the art using the basic concept of the disclosure defined in the following claims also belong to the scope of the disclosure.

**Claims**

1.  A server (100) comprising:

    a communication interface;
    memory (130) storing one or more instructions; and
    at least one processor (120) operatively connected to the memory and the communication interface, and configured to execute the one or more instructions to:

    obtain a first image by compressing an original image;
    obtain quality information of the first image by analyzing image quality of the first image;
    obtain, based on the quality information, meta model information of a meta model used for performing image quality processing on the first image; and
    control the communication interface to transmit the meta model information and the first image to an image processing device configured to display a second image based on the meta model information and the first image.

2.  The server of claim 1,

    wherein the first image comprises a plurality of frame images of video content, and
    wherein the at least one processor (120) is further configured to execute the one or more instructions to obtain quality information of a first frame image at a first time point from among the plurality of frame images based on overall quality information of the plurality of frame images.

3.  The server of claim 2, wherein the at least one processor (120) is further configured to execute the one or more instructions to:

    set a quality upper bound value and a quality lower bound value based on a quality average value and standard deviation of the plurality of frame images; and
    determine a quality value of the first frame image based on the quality upper bound value and the quality lower bound value.

4.  The server of any one of claims 1 to 3, wherein the at least one processor (120) is further configured to execute the one or more instructions to control the communication interface to transmit the quality information to the image processing device.

5.  The server of any one of claims 1 to 4,

    wherein the meta model is obtained based on at least one reference model,
    wherein the meta model information comprises information about the at least one reference model and information about a weight applied to the at least one reference model, and
    wherein the at least one processor (120) is further configured to execute the one or more instructions to determine the at least one reference model and the weight applied to the at least one reference model based on the quality information.

6.  The server of claim 5, wherein the at least one processor (120) is further configured to execute the one or more instructions to determine the weight based on a difference between quality information corresponding to the at least one reference model and the quality information of the first image.

7.  The server of claim 5 or 6, wherein the at least one reference model comprises a first reference model pre-stored in the server or a second reference model pre-stored in the image processing device.

8.  The server of claim 7, wherein the at least one processor (120) is further configured to execute the one or more instructions to generate the first reference model corresponding to the first image based on the first image.

9.  The server of claim 7 or 8, wherein the at least one processor (120) is further configured to execute the one or more instructions to:

select the first reference model or the second reference model based on the quality information;
based on the first reference model being selected, control the communication interface to transmit information about the first reference model to the image processing device; and
based on the second reference model being selected, control the communication interface to transmit identification information of the second reference model to the image processing device.

10. An image processing device (200) comprising:

a communication interface;
a display;
memory storing one or more instructions; and
at least one processor operatively connected to the memory, the display, and the communication interface, and configured to execute the one or more instructions to:

control the communication interface to receive a first image and meta model information from a server (100);
generate a meta model based on the meta model information;
train the meta model by using a learning data set corresponding to the first image, to obtain a trained meta model;
obtain, based on the trained meta model, a second image obtained by performing image quality processing on the first image; and
control the display to display the second image.

11. The image processing device of claim 10, wherein the at least one processor (220) is further configured to execute the one or more instructions to generate the meta model based on reference model information in the meta model information and weight information applied to the reference model information.

12. The image processing device of claim 11, wherein the at least one processor (120) is further configured to execute the one or more instructions to:

obtain quality information of the first image; and
generate the learning data set by degrading images classified into a same category as the first image based on the quality information of the first image.

13. An operating method of a server (100), the operating method comprising:

obtaining a first image by compressing an original image;
obtaining quality information of the first image by analyzing image quality of the first image;
obtaining, based on the quality information, meta model information of a meta model used for performing image quality processing on the first image; and
transmitting the meta model information and the first image to an image processing device configured to display a second image based on the meta model information and the first image.

14. The operating method of claim 13,

wherein the first image comprises a plurality of frame images of video content, and
wherein the obtaining the quality information of the first image comprises obtaining quality information of a first frame image at a first time point from among the plurality of frame images based on overall quality information of the plurality of frame images.

15. The operating method of claim 14, wherein the obtaining the quality information of the first image comprises:

setting a quality upper bound value and a quality lower bound value based on a quality average value and standard deviation of the plurality of frame images; and
determining a quality value of the first frame image based on the quality upper bound value and the quality lower bound value.

FIG. 1

FIG. 2

EP 4 753 269 A1

# FIG. 3

```
                        ┌─────────┐
                        │  START  │
                        └─────────┘
                             │
                             ▼
        ┌──────────────────────────────────────┐
        │  OBTAIN FIRST IMAGE BY COMPRESSING     │──── S310
        │           ORIGINAL IMAGE               │
        └──────────────────────────────────────┘
                             │
                             ▼
        ┌──────────────────────────────────────┐
        │    OBTAIN QUALITY INFORMATION BY       │──── S320
        │   ANALYZING QUALITY OF FIRST IMAGE     │
        └──────────────────────────────────────┘
                             │
                             ▼
        ┌──────────────────────────────────────┐
        │    OBTAIN META MODEL INFORMATION       │──── S330
        │     BASED ON QUALITY INFORMATION       │
        └──────────────────────────────────────┘
                             │
                             ▼
        ┌──────────────────────────────────────┐
        │ TRANSMIT META MODEL INFORMATION AND    │──── S340
        │ FIRST IMAGE TO IMAGE PROCESSING DEVICE │
        └──────────────────────────────────────┘
                             │
                             ▼
                        ┌─────────┐
                        │   END   │
                        └─────────┘
```

EP 4 753 269 A1

# FIG. 4

```
                    410                 420                 430
                     /                   /                   /
ORIGINAL    ┌──────────────┐   ┌──────────────┐   ┌──────────────┐
IMAGE ─────▶│    IMAGE      │──▶│ IMAGE QUALITY │──▶│  META MODEL   │
            │ COMPRESSION   │   │ ANALYSIS UNIT │   │ ACQUISITION   │
            │    UNIT       │   │               │   │    UNIT       │
            └──────────────┘   └──────────────┘   └──────────────┘
                                                           │
                                                           ▼
                        FIRST IMAGE + META MODEL INFORMATION
```

EP 4 753 269 A1

**FIG. 5**

500

EP 4 753 269 A1

# FIG. 6

600

# FIG. 7

# FIG. 8

```
        ┌─────────┐
        │  START  │
        └─────────┘
             │
             ▼
┌─────────────────────────────────┐
│  RECEIVE FIRST IMAGE AND META    │──── S810
│  MODEL INFORMATION               │
└─────────────────────────────────┘
             │
             ▼
┌─────────────────────────────────┐
│  GENERATE META MODEL BASED ON    │──── S820
│  META MODEL INFORMATION          │
└─────────────────────────────────┘
             │
             ▼
┌─────────────────────────────────┐
│  TRAIN META MODEL BY USING       │──── S830
│  LEARNING DATA SET CORRESPONDING │
│  TO FIRST IMAGE                  │
└─────────────────────────────────┘
             │
             ▼
┌─────────────────────────────────┐
│  OBTAIN, BASED ON TRAINED META   │──── S840
│  MODEL, SECOND IMAGE OBTAINED BY │
│  PERFORMING IMAGE QUALITY        │
│  PROCESSING ON FIRST IMAGE       │
└─────────────────────────────────┘
             │
             ▼
        ┌─────────┐
        │   END   │
        └─────────┘
```

# FIG. 9

101
FIRST IMAGE

910
IMAGE QUALITY PROCESSING UNIT

102
SECOND IMAGE

UPDATED MODEL

920
MODEL TRAINING UNIT

META MODEL INFORMATION

FIG. 10

META MODEL INFORMATION → DATA PARSING UNIT (1010)

920

1020
- FIRST MODEL STORAGE UNIT (1021)
- SECOND MODEL STORAGE UNIT (1022)

WEIGHT INFORMATION → META MODEL GENERATION UNIT (1030)

TRANSFER LEARNING UNIT (1040) → UPDATED MODEL

FIRST IMAGE → LEARNING DB GENERATION UNIT (1050)

DB (1060)

EP 4 753 269 A1

# FIG. 11

EP 4 753 269 A1

# FIG. 12

IQA | Kernel Sigma, Copression Quality, Noise etc.

Collected DB $\,\nearrow$1130

Compressing

Blurring

Down sampling

Adding Noise

Degradation $\,\nearrow$1210

EP 4 753 269 A1

# FIG. 13

JPEG compression

1310

| Color space conversion | → | Subsampling | → | DCT | → | Quantization | → | Encoding |

JPEG-compressed image data

| Inverse color space conversion | ← | Inverse subsampling | ← | Inverse DCT | ← | Dequantization | ← | Decoding |

Raw image data

JPEG decompression

# FIG. 14

# FIG. 15

# FIG. 16

```
                                                            ┌─ 1600
┌──────────────────────────────────────────────────────────┐
│                                                            │
│       ┌─ 1640              ┌─ 1610              ┌─ 1680    │
│   ┌──────────────┐    ┌──────────────┐    ┌──────────────┐ │
│   │  TUNER UNIT  │◄──►│              │◄──►│    VIDEO     │ │
│   └──────────────┘    │              │    │ PROCESSING   │ │
│       ┌─ 1650         │              │    │    UNIT      │ │
│   ┌──────────────┐    │              │    └──────────────┘ │
│   │ COMMUNICATION│◄──►│              │        ┌─ 1620      │
│   │     UNIT     │    │              │    ┌──────────────┐ │
│   └──────────────┘    │              │◄──►│ DISPLAY UNIT │ │
│       ┌─ 1630         │              │    └──────────────┘ │
│   ┌──────────────┐    │              │        ┌─ 1685      │
│   │DETECTION UNIT│    │              │    ┌──────────────┐ │
│ 1631┌────────────┐    │  PROCESSOR   │◄──►│    AUDIO     │ │
│  ─│ MICROPHONE  │    │              │    │ PROCESSING   │ │
│   └────────────┘     │              │    │    UNIT      │ │
│ 1632┌────────────┐    │              │    └──────────────┘ │
│  ─│ CAMERA UNIT │◄──►│              │        ┌─ 1660      │
│   └────────────┘     │              │    ┌──────────────┐ │
│ 1633┌────────────┐    │              │◄──►│ AUDIO OUTPUT │ │
│  ─│   LIGHT     │    │              │    │    UNIT      │ │
│   │ RECEPTION   │    │              │    └──────────────┘ │
│   │    UNIT     │    │              │        ┌─ 1695      │
│   └────────────┘     │              │    ┌──────────────┐ │
│   └──────────────┘    │              │◄──►│  POWER UNIT  │ │
│       ┌─ 1670         │              │    └──────────────┘ │
│   ┌──────────────┐    │              │        ┌─ 1690      │
│   │ INPUT/OUTPUT │◄──►│              │    ┌──────────────┐ │
│   │     UNIT     │    └──────────────┘◄──►│    MEMORY    │ │
│   └──────────────┘                        └──────────────┘ │
│                                                            │
└──────────────────────────────────────────────────────────┘
```

## INTERNATIONAL SEARCH REPORT

| International application No. |
|---|
| **PCT/KR2024/010071** |

| A. | CLASSIFICATION OF SUBJECT MATTER |
|---|---|

**H04N 21/2662**(2011.01)i; **H04N 21/2343**(2011.01)i; **H04N 7/01**(2006.01)i; **G06T 3/4053**(2024.01)i; **G06N 3/0985**(2023.01)i; **G06N 3/045**(2023.01)i

According to International Patent Classification (IPC) or to both national classification and IPC

| B. | FIELDS SEARCHED |
|---|---|

Minimum documentation searched (classification system followed by classification symbols)

H04N 21/2662(2011.01); G06N 20/00(2019.01); G06T 3/40(2006.01); G06T 5/50(2006.01); H04N 19/132(2014.01); H04N 19/184(2014.01); H04N 21/4402(2011.01); H04N 21/658(2011.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 영상(video), 다운스케일링(downscaling), 업스케일링(upscaling), 메타데이터(metadata), 학습(training)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2021-0078218 A (SAMSUNG ELECTRONICS CO., LTD.) 28 June 2021 (2021-06-28) See paragraphs [0037]-[0164]; and figures 1-3. | 1-15 |
| Y | KR 10-2020-0044652 A (SAMSUNG ELECTRONICS CO., LTD.) 29 April 2020 (2020-04-29) See paragraphs [0024]-[0047] and [0118]-[0159]; and claims 1, 3 and 7-8. | 1-15 |
| Y | KR 10-2020-0061478 A (INDUSTRY-ACADEMIC COOPERATION FOUNDATION, YONSEI UNIVERSITY) 03 June 2020 (2020-06-03) See paragraph [0077]; and claim 1. | 12 |
| A | US 2020-0275155 A1 (SAMSUNG ELECTRONICS CO., LTD.) 27 August 2020 (2020-08-27) See claims 1-20. | 1-15 |
| A | KR 10-2022-0056599 A (KT CORPORATION) 06 May 2022 (2022-05-06) See claims 1-2. | 1-15 |

☐ Further documents are listed in the continuation of Box C.      ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **30 October 2024** | **30 October 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
|---|
| **PCT/KR2024/010071** |

| Patent document cited in search report | | | Publication date (day/month/year) | Patent family member(s) | | | Publication date (day/month/year) |
|---|---|---|---|---|---|---|---|
| KR | 10-2021-0078218 | A | 28 June 2021 | EP | 3839874 | A1 | 23 June 2021 |
| | | | | EP | 3839874 | B1 | 23 August 2023 |
| | | | | US | 12039693 | B2 | 16 July 2024 |
| | | | | US | 2021-0192686 | A1 | 24 June 2021 |
| KR | 10-2020-0044652 | A | 29 April 2020 | CN | 112715029 | A | 27 April 2021 |
| | | | | CN | 112740687 | A | 30 April 2021 |
| | | | | CN | 112840650 | A | 25 May 2021 |
| | | | | CN | 112840650 | B | 30 April 2024 |
| | | | | CN | 112868229 | A | 28 May 2021 |
| | | | | CN | 112889282 | A | 01 June 2021 |
| | | | | CN | 112889282 | B | 04 June 2024 |
| | | | | CN | 112889283 | A | 01 June 2021 |
| | | | | CN | 112913237 | A | 04 June 2021 |
| | | | | CN | 113196761 | A | 30 July 2021 |
| | | | | EP | 3811617 | A1 | 28 April 2021 |
| | | | | EP | 3811617 | A4 | 28 July 2021 |
| | | | | EP | 3811618 | A1 | 28 April 2021 |
| | | | | EP | 3811618 | A4 | 04 August 2021 |
| | | | | EP | 3811619 | A1 | 28 April 2021 |
| | | | | EP | 3811619 | A4 | 18 August 2021 |
| | | | | EP | 3844962 | A1 | 07 July 2021 |
| | | | | EP | 3844962 | A4 | 03 November 2021 |
| | | | | EP | 3866466 | A1 | 18 August 2021 |
| | | | | EP | 3866466 | A4 | 18 August 2021 |
| | | | | EP | 3868096 | A1 | 25 August 2021 |
| | | | | EP | 3868096 | A4 | 02 November 2022 |
| | | | | EP | 3868097 | A1 | 25 August 2021 |
| | | | | EP | 3868097 | A4 | 02 November 2022 |
| | | | | EP | 3869803 | A1 | 25 August 2021 |
| | | | | EP | 3869803 | A4 | 16 November 2022 |
| | | | | KR | 10-2020-0044653 | A | 29 April 2020 |
| | | | | KR | 10-2020-0044661 | A | 29 April 2020 |
| | | | | KR | 10-2020-0044662 | A | 29 April 2020 |
| | | | | KR | 10-2020-0044665 | A | 29 April 2020 |
| | | | | KR | 10-2020-0044666 | A | 29 April 2020 |
| | | | | KR | 10-2020-0044667 | A | 29 April 2020 |
| | | | | KR | 10-2020-0044668 | A | 29 April 2020 |
| | | | | KR | 10-2021-0113131 | A | 15 September 2021 |
| | | | | KR | 10-2285738 | B1 | 05 August 2021 |
| | | | | KR | 10-2312337 | B1 | 14 October 2021 |
| | | | | KR | 10-2312338 | B1 | 14 October 2021 |
| | | | | KR | 10-2500761 | B1 | 16 February 2023 |
| | | | | KR | 10-2525576 | B1 | 26 April 2023 |
| | | | | KR | 10-2525577 | B1 | 26 April 2023 |
| | | | | KR | 10-2525578 | B1 | 26 April 2023 |
| | | | | US | 10817985 | B2 | 27 October 2020 |
| | | | | US | 10817986 | B2 | 27 October 2020 |
| | | | | US | 10817987 | B2 | 27 October 2020 |
| | | | | US | 10817988 | B2 | 27 October 2020 |
| | | | | US | 10817989 | B2 | 27 October 2020 |

Form PCT/ISA/210 (patent family annex) (July 2022)

## INTERNATIONAL SEARCH REPORT
### Information on patent family members

| International application No. |
| --- |
| **PCT/KR2024/010071** |

| Patent document cited in search report | Publication date (day/month/year) | Patent family member(s) | | | Publication date (day/month/year) |
| --- | --- | --- | --- | --- | --- |
| | | US | 10819992 | B2 | 27 October 2020 |
| | | US | 10819993 | B2 | 27 October 2020 |
| | | US | 10825139 | B2 | 03 November 2020 |
| | | US | 10825203 | B2 | 03 November 2020 |
| | | US | 10825204 | B2 | 03 November 2020 |
| | | US | 10825205 | B2 | 03 November 2020 |
| | | US | 10825206 | B2 | 03 November 2020 |
| | | US | 10832447 | B2 | 10 November 2020 |
| | | US | 10937197 | B2 | 02 March 2021 |
| | | US | 10950009 | B2 | 16 March 2021 |
| | | US | 11132765 | B2 | 28 September 2021 |
| | | US | 11138691 | B2 | 05 October 2021 |
| | | US | 11138763 | B2 | 05 October 2021 |
| | | US | 11159809 | B2 | 26 October 2021 |
| | | US | 11170472 | B2 | 09 November 2021 |
| | | US | 11170473 | B2 | 09 November 2021 |
| | | US | 11170534 | B2 | 09 November 2021 |
| | | US | 11190782 | B2 | 30 November 2021 |
| | | US | 11200702 | B2 | 14 December 2021 |
| | | US | 11288770 | B2 | 29 March 2022 |
| | | US | 11616988 | B2 | 28 March 2023 |
| | | US | 11647210 | B2 | 09 May 2023 |
| | | US | 11663747 | B2 | 30 May 2023 |
| | | US | 11688038 | B2 | 27 June 2023 |
| | | US | 11720997 | B2 | 08 August 2023 |
| | | US | 11748847 | B2 | 05 September 2023 |
| | | US | 2020-0126185 | A1 | 23 April 2020 |
| | | US | 2020-0126186 | A1 | 23 April 2020 |
| | | US | 2020-0126187 | A1 | 23 April 2020 |
| | | US | 2020-0126262 | A1 | 23 April 2020 |
| | | US | 2020-0126263 | A1 | 23 April 2020 |
| | | US | 2020-0151914 | A1 | 14 May 2020 |
| | | US | 2020-0175650 | A1 | 04 June 2020 |
| | | US | 2020-0177898 | A1 | 04 June 2020 |
| | | US | 2020-0184685 | A1 | 11 June 2020 |
| | | US | 2020-0193647 | A1 | 18 June 2020 |
| | | US | 2020-0219232 | A1 | 09 July 2020 |
| | | US | 2020-0219233 | A1 | 09 July 2020 |
| | | US | 2020-0219292 | A1 | 09 July 2020 |
| | | US | 2020-0219293 | A1 | 09 July 2020 |
| | | US | 2020-0226717 | A1 | 16 July 2020 |
| | | US | 2020-0234469 | A1 | 23 July 2020 |
| | | US | 2020-0260093 | A1 | 13 August 2020 |
| | | US | 2021-0042882 | A1 | 11 February 2021 |
| | | US | 2021-0044813 | A1 | 11 February 2021 |
| | | US | 2021-0056665 | A1 | 25 February 2021 |
| | | US | 2021-0056666 | A1 | 25 February 2021 |
| | | US | 2021-0118189 | A1 | 22 April 2021 |
| | | US | 2021-0134020 | A1 | 06 May 2021 |
| | | US | 2021-0350586 | A1 | 11 November 2021 |

Form PCT/ISA/210 (patent family annex) (July 2022)

## INTERNATIONAL SEARCH REPORT
### Information on patent family members

International application No.

**PCT/KR2024/010071**

| Patent document cited in search report | | | Publication date (day/month/year) | Patent family member(s) | | | Publication date (day/month/year) |
|---|---|---|---|---|---|---|---|
| | | | | US | 2021-0358083 | A1 | 18 November 2021 |
| | | | | US | 2021-0385502 | A1 | 09 December 2021 |
| | | | | US | 2022-0030260 | A1 | 27 January 2022 |
| | | | | US | 2022-0138904 | A1 | 05 May 2022 |
| | | | | WO | 2020-080623 | A1 | 23 April 2020 |
| | | | | WO | 2020-080665 | A1 | 23 April 2020 |
| | | | | WO | 2020-080698 | A1 | 23 April 2020 |
| | | | | WO | 2020-080709 | A1 | 23 April 2020 |
| | | | | WO | 2020-080751 | A1 | 23 April 2020 |
| | | | | WO | 2020-080765 | A1 | 23 April 2020 |
| | | | | WO | 2020-080782 | A1 | 23 April 2020 |
| | | | | WO | 2020-080827 | A1 | 23 April 2020 |
| | | | | WO | 2020-080873 | A1 | 23 April 2020 |
| KR | 10-2020-0061478 | A | 03 June 2020 | KR | 10-2163573 | B1 | 12 October 2020 |
| US | 2020-0275155 | A1 | 27 August 2020 | CN | 113475091 | A | 01 October 2021 |
| | | | | CN | 113475091 | B | 25 August 2023 |
| | | | | EP | 3699902 | A1 | 26 August 2020 |
| | | | | EP | 3699902 | B1 | 26 May 2021 |
| | | | | JP | 2022-521254 | A | 06 April 2022 |
| | | | | JP | 7301993 | B2 | 03 July 2023 |
| | | | | KR | 10-2020-0102879 | A | 01 September 2020 |
| | | | | KR | 10-2222871 | B1 | 04 March 2021 |
| | | | | US | 11303958 | B2 | 12 April 2022 |
| | | | | WO | 2020-171657 | A1 | 27 August 2020 |
| KR | 10-2022-0056599 | A | 06 May 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Zero-Shot Super-Resolution using Deep Internal Learning, hereinafter referred to as ''Paper 1. *CVPR 2018*

- Fast Adaptation to Super-Resolution Networks via Meta-Learning, hereinafter referred to as ''Paper 2. ECCV 2021. MetaSR